# EUROPÄISCHE PATENTSCHRIFT

(11) **EP 4 419 574 B1**
(45) Veröffentlichungstag und Bekanntmachung des Hinweises auf die Patenterteilung: **17.09.2025**
(21) Anmeldenummer: 22805811.1
(22) Anmeldetag: 17.10.2022
(51) Int. Cl.: C08G 18/09, C08G 18/22, C08G 18/40, C08G 18/42, C08G 18/48, C08G 18/76, C08J 9/14, C08J 9/08

(54) **VERFAHREN ZUR HERSTELLUNG VON VERBESSERTEN POLYISOCYANURAT-HARTSCHAUMSTOFFEN AUF BASIS VON AROMATISCHEN POLYESTERPOLYOLEN UND ETHYLENOXID BASIERTEN POLYETHERPOLYOLEN**
METHOD FOR THE PREPARATION OF IMPROVED POLYISOCYANURATE FOAMS BASED ON AROMATIC POLYESTER POLYOLS AND ETHYLENE OXIDE-BASED POLYETHER POLYOLS
PROCÉDÉ DE FABRICATION DE MOUSSES DURES POLYISOCYANURATE AMÉLIORÉES À BASE DE POLYESTERPOLYOLS AROMATIQUES ET DE POLYÉTHERPOLYOLS À BASE D'OXYDE D'ÉTHYLÈNE

(30) Priorität: 18.10.2021 EP 21203229
(43) Veröffentlichungstag der Anmeldung: 28.08.2024
(73) Patentinhaber: BASF SE, 67056 Ludwigshafen am Rhein (DE)
(72) Erfinder: KALUSCHKE, Tobias, 49448 Lemfoerde (DE); KOCH, Sebastian, 49448 Lemfoerde (DE); JACOBMEIER, Olaf, 49448 Lemfoerde (DE)
(74) Vertreter: BASF IP Association
(86) Internationale Anmeldenummer: PCT/EP2022/078775
(87) Internationale Veröffentlichungsnummer: WO 2023/066838

(56) Entgegenhaltungen:
- EP-A1- 2 184 306
- WO-A1-2011/163113
- WO-A1-2012/072687
- WO-A1-2012/083038
- WO-A1-2013/179251
- WO-A1-2015/083092
- WO-A1-2020/160206
- WO-A1-2021/008921

## Beschreibung

Die vorliegende Erfindung betrifft ein Verfahren zur Herstellung von Polyisocyanurat-Hartschaumstoffen, wobei (A) Polyisocyanate mit (B) Verbindungen mit gegenüber Isocyanat-Gruppen reaktiven Wasserstoffatomen, (C) Flammschutzmittel, (D) Treibmittel, (E) Katalysator, und (F) optional weiteren Hilfs- und Zusatzstoffe bei einem Isocyanatindex von mindestens 220 zu einer Reaktionsmischung vermischt und zum Polyisocyanurat-Hartschaumstoff ausgehärtet werden, wobei die Komponente (B) mindestens ein aromatisches Polyesterpolyol (b1) und mindestens ein Polyetherpolyol (b2) enthält, wobei das Polyesterpolyol (b1) durch Veresterung von: (b1.1) 10 bis 50 Mol-%, einer Dicarbonsäurezusammensetzung, enthaltend aromatische Dicarbonsäuren, (b1.2) 0 bis 20 Mol-% einer oder mehrerer Fettsäuren und/oder Fettsäurederivate, (b1.3) 10 bis 80 Mol-% eines oder mehrerer aliphatischer oder cycloaliphatischer Diole mit 2 bis 18 C-Atomen oder Alkoxylate derselben, (b1.4) 0 bis 50 Mol-% eines höherfunktionellen Polyols ausgewählt aus der Gruppe bestehend aus Glycerin, alkoxyliertem Glycerin, Trimethylolpropan, alkoxyliertem Trimethylolpropan, Pentaerythrol, alkoxyliertem Pentaerythrol, erzeugt wird, sich die Gesamtmenge der Komponenten (b1.1) bis (b1.4), zu 100 Mol-% addiert, und das Polyesterpolyol (b1) eine mittlere Funktionalität von ≤ 3.0 und ≥ 1.7 besitzt, und wobei das Polyetherpolyol (b2) eine Hydroxylzahl von 160 - 350 mg KOH/g besitzt, und durch Alkoxylierung eines Starters oder Startergemisches mit einer mittleren Funktionalität ≤ 3.5 und ≥ 1.5 hergestellt wird, wobei als Alkylenoxid zur Herstellung von Polyetherpolyol (b2) mindestens 80 Gew.-% Ethylenoxid eingesetzt wird und Polyetherpolyol (b2) mindestens 90 % primäre Hydroxyl-Endgruppen aufweist und wobei das Massenverhältnis der Komponente (b1) zu Komponente (b2) ≤ 3 und ≥ 1 beträgt und die Summe der Massenanteile von Komponente (b1) und Komponente (b2), bezogen auf Komponente (B), > 80 Gew.-% ist und das Treibmittel (D) chemische und physikalische Treibmittel enthält, wobei das chemische Treibmittel ausgewählt ist aus der Gruppe, bestehend aus Ameisensäure-Wassermischungen und Ameisensäure. Weiter betrifft die vorliegende Erfindung einen Polyisocyanurat-Hartschaumstoff, erhältlich nach dem erfindungsgemäßen Verfahren und eine Polyolkomponente zum Einsatz in dem erfindungsgemäßen Verfahren.

Polyurethan- oder Polyisocyanurat-Hartschaumstoffe sind seit langem bekannt. Eine wichtige Anwendung ist die Wärme- und Kälteisolation, z. B. in Kühlgeräten, in Warmwasserspeichern, in Fernwärmerohren oder im Bauwesen, beispielsweise in Verbundelementen aus Deckschichten und einem Kern aus Polyurethan- oder Polyisocyanurat-Hartschaumstoff, auch als Sandwichelemente bezeichnet, eingesetzt. Die Herstellung von solchen Verbundelementen, insbesondere bei Verwendung mindestens einer metallischen Deckschicht, wird gegenwärtig in großem Umfang praktiziert, meist auf kontinuierlich arbeitenden Doppelbandanlagen. Neben Sandwichelementen zur Kühlhausisolierung gewinnen Sandwichelemente zur Gestaltung von Fassaden verschiedenster Gebäude immer mehr an Bedeutung.

Die wesentlichen Anforderungen an Reaktionsmischungen zur kontinuierlichen Herstellung von Polyurethan- oder Polyisocyanurat-Hartschaum-basierten Sandwichelementen bestehen zum einen darin, dass sie die Herstellung von Hartschäumen mit guten mechanischen Eigenschaften, wie einer guter Druckfestigkeiten bei einer dennoch geringen Oberflächensprödigkeit und guten thermischen Isolationseigenschaften ermöglichen.

Weiterhin werden den Reaktionsmischungen zur Herstellung von Polyurethan- oder Polyisocyanurat-Hartschaumstoffen nahezu immer Katalysatoren zugesetzt, welche es ermöglichen, die notwendigen Abbindezeiten stark zu reduzieren. Hierbei handelt es sich meist um tertiäre Amine welche oft toxikologisch und ökologisch bedenklich sind und im Laufe der Zeit aus dem Schaumstoff abgegeben werden.

Daher ist es wünschenswert, dass Reaktionsmischungen zur Herstellung von Polyurethan- oder Polyisocyanurat-Hartschaumstoffen auch mit möglichst geringen Katalysatorgehältern, dennoch geringe Abbindezeiten aufweisen und diese Reaktionsmischungen zusätzlich eine schnelle Aushärtung zum Hartschaumstoff ermöglichen. Eine schnellere Aushärtung zum Hartschaum führt dazu, dass dieser deutlich früher die notwendigen Festigkeiten erreicht, welche zum Schneiden benötigt werden, und ermöglicht es daher z.B. die kontinuierlich arbeitenden Doppelbandanlagen mit höheren Geschwindigkeiten betreiben zu können, was zu einer erhöhten Produktivität bei der Sandwichherstellung führt. Zusätzlich ist bekannt, dass schnellere Reaktivitäten und Schaum-härtungen dafür sorgen, dass feinere Schaumzelldurchmesser erhalten werden, was sich vorteilhaft auf die Dämmleistung des Hartschaums auswirkt.

Weiterhin ist es wünschenswert, dass die erhaltenen Schaumstoffe, die notwendigen Flammschutzanforderungen bei einem möglichst geringen Gehalt an ebenfalls meist ökologisch und toxikologisch bedenklichen Flammschutzmitteln erreichen.

Da Flammschutzmittel und Katalysatoren in der Regel deutlich höherpreisiger als Polyole sind, ist es auch aus ökonomischen Gründen erstrebenswert, die Gehälter beider Komponenten möglichst gering zu halten.

Speziell bei kontinuierlicher Verarbeitung zur Herstellung von Sandwichelementen sollen die Reaktionsmischungen auch zu Hartschaumstoffen führen, die eine geringe

Oberflächenschaumsprödigkeit aufweisen, damit eine gute Anhaftung an der Grenzfläche zwischen Deckschicht und Hartschaum gewährleistet wird. Hierbei ist bekannt, dass Polyurethanhartschaumstoffe, die üblicherweise bei einem Isocyanatindex von 120 - 160 hergestellt werden, in der Regel eine deutlich geringere Schaumsprödigkeit aufweisen als Polyisocyanurat-Hartschaumstoffe, die bei einem Isocyanatindex von > 180 hergestellt werden. Aus diesem Grund wird bei der kontinuierlichen Herstellung von Polyisocyanurat-Hartschaumverbundelementen in der Regel ein Haftvermittler zwischen unterer Deckschicht und dem Schaum aufgetragen, um eine ähnliche Deckschichthaftungen, wie bei Polyurethanhartschaumverbundelementen zu erreichen. Ein großer Nachteil von Polyurethan-Hartschaumstoffen gegenüber Polyisocyanurat-Hartschaumstoffen liegt darin, dass deren Reaktionsmischungen deutlich größere Anteile an oftmals ökotoxikologisch bedenklichen Flammschutzmitteln aufweisen müssen, um die notwendigen Flammschutzanforderungen zu erfüllen.

Polyisocyanuratschaumstoffe auf Basis von Polyestern und Polyethern sind bekannt. So beschreiben, WO 2013139781 und WO13102540 Polyisocyanuratschaumstoffe, wobei das Massenverhältnis der eingesetzten Polyesterolen zu Polyetherolen mindestens 7 beträgt.

Nach WO 2013107573 beträgt das Gewichtsverhältnis der eingesetzten Polyesterole zu Polyetherolen für die Herstellung des Polyisocyanuratschaumstoffs weniger als 1,6 Die vorzugsweise verwendeten Polyetherole bestehen aus einer Mischung, wobei ein Teil durch Propoxylierung und der Rest des Polyetherpolyols durch Ethoxylierung des Startermoleküls erhalten wird. Dabei weisen die ethylenoxidbasierten Polyetherpolyole vorzugsweise Funktionalitäten von größer 4 und die propylenoxidbasierten Polyetherole von kleiner 5 auf.

EP3097132 offenbart die Herstellung von Polyisocyanuratschaumstoffen, wobei die Polyolkomponente ein Polyetherpolyol mit einer Hydroxylzahl zwischen 50 und 400 mg KOH/g umfassen, das durch Umsetzen eines polyfunktionellen Initiators zuerst mit Ethylenoxid und anschließend mit Propylenoxid erhalten wird, so dass der Propoxylierungsgrad des Polyetherpolyols zwischen 0,33 und 2 liegt.

WO 2021008921, WO2012083038 und EP2184306 offenbaren Polyisocyanuratschaumstoffe, ausgehend von einer Mischung aus Polyetherpolyol und Polyesterpolyol als gegenüber Isocyanat reaktive Komponente, wobei als Treibmittel Wasser eingesetzt wird.

Dabei sind die Eigenschaften der erhaltenen Polyisocyanurat-Hartschaumstoffe gemäß Stand der Technik weiter verbesserungswürdig, insbesondere das Aushärtungsverhalten, das Brandverhalten sowie die Sprödigkeit der Schaumoberfläche.

Aufgabe der Erfindung war es daher das Eigenschaftsprofil der Polyisocyanurat-Hartschaumstoffe zu verbessern und insbesondere Polyisocyanurat-Hartschaumstoffe mit hervorragenden mechanischen Eigenschaften, wie einer hervorragenden Druckfestigkeit bei gleichzeitig reduzierter Oberflächensprödigkeit zu liefern. Weiter soll deren Herstellung unter Einsatz einer möglichst geringen Menge an Katalysatoren bei dennoch hoher Reaktionsgeschwindigkeit und Aushärtung möglich sein, und auch mit geringen Flammschutzmittelanteilen eine gute Brandfestigkeit erreicht werden. Weiter war es Aufgabe, ein Verfahren zur Herstellung solcher Polyisocyanurat- Hartschaumstoffe zu entwickeln, das für die Herstellung von Sandwichelelementen, insbesondere im kontinuierlichen Herstellverfahren, geeignet ist.

Diese Aufgabe wird gelöst durch einen Polyisocyanurat-Hartschaumstoff, erhältlich nach einem Verfahren, wobei (A) Polyisocyanate mit (B) Verbindungen mit gegenüber Isocyanat-Gruppen reaktiven Wasserstoffatomen, (C) Flammschutzmittel, (D) Treibmittel, (E) Katalysator, und (F) optional weiteren Hilfs- und Zusatzstoffe bei einem Isocyanatindex von mindestens 220 zu einer Reaktionsmischung vermischt und zum Polyisocyanurat-Hartschaumstoff ausgehärtet werden, wobei die Komponente (B) mindestens ein aromatisches Polyesterpolyol (b1) und mindestens ein Polyetherpolyol (b2) enthält, wobei das Polyesterpolyol (b1) durch Veresterung von: (b1.1) 10 bis 50 Mol-%, einer Dicarbonsäurezusammensetzung, enthaltend aromatische Dicarbonsäuren, (b1.2) 0 bis 20 Mol-% einer oder mehrerer Fettsäuren und/oder Fettsäurederivate, (b1.3) 10 bis 80 Mol-% eines oder mehrerer aliphatischer oder cycloaliphatischer Diole mit 2 bis 18 C-Atomen oder Alkoxylate derselben, (b1.4) 0 bis 50 Mol-% eines höherfunktionellen Polyols ausgewählt aus der Gruppe bestehend aus Glycerin, alkoxyliertem Glycerin, Trimethylolpropan, alkoxyliertem Trimethylolpropan, Pentaerythrol, alkoxyliertem Pentaerythrol, erzeugt wird, sich die Gesamtmenge der Komponenten (b1.1) bis (b1.4), zu 100 Mol-% addiert und das aromatische Polyesterpolyol (b1) eine mittlere Funktionalität von ≤ 3.0 und ≥ 1.7 besitzt, und wobei das Polyetherpolyol (b2) eine Hydroxylzahl von 160 - 350 mg KOH/g besitzt, und durch Alkoxylierung eines Starters oder Startergemisches mit einer mittleren Funktionalität ≤ 3.5 und ≥ 1.5 hergestellt wird, wobei als Alkylenoxid zur Herstellung von Polyetherpolyol (b2) mindestens 80 Gew.-% Ethylenoxid eingesetzt wird und Polyetherpolyol (b2) mindestens 90 % primäre Hydroxyl-Endgruppen aufweist und wobei das Massenverhältnis der Komponente (b1) zu Komponente (b2) ≤ 3 und ≥ 1 beträgt und die Summe der Massenanteile von Komponente (b1) und Komponente (b2) bezogen auf Komponente (B) > 80 Gew.-% ist und das Treibmittel (D) chemische und physikalische Treibmittel enthält, wobei das chemische Treibmittel ausgewählt ist aus der Gruppe, bestehend aus Ameisensäure-Wassermischungen und Ameisensäure.

Unter einem Polyisocyanurat-Hartschaum wird in der Regel ein Schaum verstanden, der sowohl Urethan- als auch Isocyanuratgruppen enthält. Im Zusammenhang mit der Erfindung soll der Begriff Polyurethan-Hartschaum auch Polyisocyanurat-Hartschaum umfassen, wobei die Herstellung von Polyisocyanurat-Hartschaumstoffen auf einem Isocyanatindex von mindestens 180 basiert. Dabei ist unter dem Isocyanatindex das Verhältnis an Isocyanat-Gruppen zu gegenüber Isocyanat-reaktiven Gruppen, multipliziert mit 100, zu verstehen. Ein Isocyanatindex von 100 entspricht dabei einem äquimolaren Verhältnis der eingesetzten Isocyanat-Gruppen der Komponente (A) zu den mit Isocyanat reaktiven Gruppen der Komponenten (B) bis (F).

Polyisocyanurat-Hartschaumstoffe gemäß der vorliegenden Erfindung weisen eine Druckspannung bei 10 % Stauchung von größer gleich 80 kPa, bevorzugt größer gleich 120 kPa, besonders bevorzugt größer gleich 140 kPa auf. Weiterhin verfügt der erfindungsgemäße Isocyanatbasierte Hartschaumstoff nach DIN ISO 4590 über eine Geschlossenzelligkeit von größer 80%, bevorzugt größer 90 %. Weitere Details zu erfindungsgemäßen Polyisocyanurat-Hartschaumstoffen finden sich im "Kunststoffhandbuch, Band 7, Polyurethane", Carl Hanser Verlag, 3. Auflage 1993, Kapitel 6, insbesondere Kapitel 6.2.2 und 6.5.2.2.

Die nachfolgend im Rahmen von Komponente (B) bis (F) aufgeführten Ausführungsformen beziehen sich sowohl auf das erfindungsgemäße Verfahren und die so erhältlichen Hartschaumstoffe als auch auf die erfindungsgemäßen Polyolkomponenten.

### Komponente (A)

Die Polyisocyanate (A) sind die in der Technik bekannten aromatischen mehrwertigen Isocyanate. Solche polyfunktionellen Isocyanate sind bekannt und können mit an sich bekannten Methoden hergestellt werden. Die polyfunktionellen Isocyanate können insbesondere auch als Gemische verwendet werden, so dass die Komponente (A) in diesem Fall verschiedene polyfunktionelle Isocyanate enthält. Polyisocyanat (A) ist ein polyfunktionelles Isocyanat mit zwei (im Folgenden auch als Diisocyanate bezeichnet) oder mehr als zwei Isocyanat-Gruppen pro Molekül. Insbesondere werden die Isocyanate (A) aus der Gruppe ausgewählt, die besteht aus aromatischen Polyisocyanaten, wie 2,4- und 2,6-Toluoldiisocyanat und den entsprechenden Isomerengemischen, 4,4'-, 2,4'- und 2,2'-Diphenylmethandiisocyanat und die entsprechenden Isomerengemischen (auch monomeres Diphenylmethan oder MMDI genannt), beispielsweise Gemische aus 4,4'- und 2,4'-Diphenylmethandiisocyanaten, Mischungen aus mindestens einem Isomeren des Diphenylmethandiisocyanat und höherkernigen Homologen des Diphenylmethandiisocyanats, die mindestens 3 aromatische Kerne und eine Funktionalität von mindestens 3 aufweisen, welche auch als Polyphenyl-Polymethylen-Polyisocyanate oder Polymeres MDI bezeichnet werden. In der Regel werden die Isomere und Homologe des MDI durch Destillation von Roh-MDI gewonnen. Polymeres MDI enthält neben dem di-nuklearen MDI (MMDI) vorzugsweise ein oder mehrere mehrkernige Kondensationsprodukte des MDI mit einer Funktionalität von mehr als 2, insbesondere 3 oder 4 oder 5. Polymeres MDI ist bekannt und wird oft als Polyphenyl-Polymethylen-Polyisocyanat. Ebenfalls als Isocyanat (A) einsetzbar sind Mischungen aus 4,4'-, 2,4'- und 2,2'-Diphenylmethandiisocyanaten und Polyphenylpolyethylen-Polyisocyanaten (Roh-MDI) und Mischungen aus Roh-MDI und Toluoldiisocyanaten. Besonders geeignet sind 2,2'-, 2,4'- oder 4,4'-Diphenylmethandiisocyanat (MDI) sowie Mischungen von zwei oder drei dieser Isomeren, 1,5-Naphthylendiisocyanat (NDI), 2,4- und/oder 2,6-Toluoldiisocyanat (TDI), 3,3'-Dimethyldiphenyldiisocyanat, 1,2-Diphenylethan-Diisocyanat und/oder p-Phenylen-Diisocyanat (PPDI).

Häufig werden auch modifizierte Polyisocyanate, d.h. Produkte, die durch die chemische Reaktion von organischen Polyisocyanaten erhalten werden und mindestens zwei reaktive Isocyanat-Gruppen pro Molekül enthalten, verwendet. Besonders erwähnt werden Polyisocyanate, die Ester- Harnstoff-, Biuret-, Allophanat-, Carbodiimid-, Isocyanurat-, Uretdion-, Carbamat und/oder Urethangruppen enthalten, häufig auch zusammen mit nicht umgesetzten Polyisocyanaten.

Die Polyisocyanate der Komponente (A) enthalten besonders bevorzugt 2,2'-MDI oder 2,4'-MDI oder 4,4'-MDI oder Gemische aus monomerem Diphenylmethandiisocyanat oder Gemische aus monomerem Diphenylmethandiisocyanat und höherkernigen Homologen des MDI. Die mittlere (durchschnittliche) Funktionalität eines Polyisocyanats, das polymeres MDI enthält, kann im Bereich von etwa 2,2 bis etwa 4, bevorzugt von 2,4 bis 3,8 und insbesondere von 2,6 bis 3,0 variieren. Polyfunktionelle Isocyanate oder Mischungen aus mehreren polyfunktionellen Isocyanaten auf MDI-Basis sind bekannt und werden von der BASF Polyurethanes GmbH unter dem Handelsnamen Lupranat^{®} M20, Lupranat^{®} M50, oder Lupranat^{®} M70 kommerziell angeboten.

Die Komponente (A) enthält vorzugsweise mindestens 70, besonders bevorzugt mindestens 90 und insbesondere 100 Gew.-%, bezogen auf das Gesamtgewicht der Komponente (A), eines oder mehrere Isocyanate, ausgewählt aus der Gruppe bestehend aus 2,2'-MDI, 2,4'-MDI, 4,4'-MDI und höherkernige Homologe des MDI. Der Gehalt an höherkernigen Homologen des MDI beträgt vorzugsweise mindestens 20 Gewichtsprozent, besonders bevorzugt mehr als 30 bis weniger als 80 Gewichtsprozent, bezogen auf das Gesamtgewicht der Komponente (A).

Die Viskosität der verwendeten Komponente (A) kann in einem weiten Bereich variieren. Die Komponente (A) hat vorzugsweise eine Viskosität von 100 bis 3000 mPa*s, besonders bevorzugt von 100 bis 1000 mPa*s, besonders bevorzugt von 100 bis 800 mPa*s, besonders bevorzugt von 200 bis 700 mPa*s und besonders bevorzugt von 400 bis 650 mPa*s bei 25 °C und ergibt sich durch die Wahl der Isocyanate (A) und deren Mischungen

### Komponente (B)

Als gegenüber Isocyanat-Gruppen reaktive Verbindungen (B) können alle in der Polyurethanchemie bekannten Verbindungen mit gegenüber Isocyanat reaktiven Gruppen eingesetzt werden, bevorzugt Verbindungen mit im Mittel mindestens 1,5 gegenüber Isocyanat reaktiven Gruppen, wie Hydroxylgruppen, -NH-Gruppen, NH2-Gruppen oder Carbonsäuregruppen, vorzugsweise NH2- oder OH-Gruppen und insbesondere mindestens 1,5 OH-Gruppen. Die mittlere Funktionalität der Verbindungen der Komponente (B) gegenüber Isocyanat-Gruppen liegt dabei im Bereich von mindestens 1,5, vorzugsweise 1,6 bis 8,0, besonders bevorzugt 1,7 bis 3,0 und insbesondere 1,8 bis 2,5.

Die Verbindungen mit mindestens zwei mit Isocyanat-Gruppen reaktiven Wasserstoffatomen (B) enthalten mindestens ein aromatisches Polyesterpolyol (b1) und mindestens ein Polyetherpolyol (b2), wobei das Massenverhältnis der Komponente (b1) zu Komponente (b2) ≤ 3 und ≥ 1 beträgt und die Summe der Massenanteile von Komponente (b1) und Komponente (b2) bezogen auf Komponente (B), > 80 Gew.-% ist.

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Erfindungsgemäß enthält die Komponente (B) mindestens ein aromatische Polyesterpolyol (b1), herstellbar durch Veresterung von (b1.1) 10 bis 50 Mol-%, einer Dicarbonsäure-Zusammensetzung, enthaltend aromatische Dicarbonsäuren, (b1.2) 0 bis 20 Mol-% einer oder mehrerer Fettsäuren und/oder Fettsäurederivate, (b1.3) 10 bis 70 Mol-% eines oder mehrerer aliphatischer oder cyclo-aliphatischer Diole mit 2 bis 18 C-Atomen oder Alkoxylate derselben, (b1.4) 0 bis 50 Mol-% eines höherfunktionellen Polyols ausgewählt aus der Gruppe bestehend aus Glycerin, alkoxyliertem Glycerin, Trimethylolpropan, alkoxyliertem Trimethylolpropan, Pentaerythrol, alkoxyliertem Pentaerythrol.

Die Dicarbonsäurezusammensetzung (b1.1) enthält Dicarbonsäuren und/oder deren Derivate welche Üblicherweise zu Herstellung von Estern eingesetzt werden können. Vorzugsweise enthält die Dicarbonsäurzusammensetzung (b1.1) mindestens eine Verbindung, ausgewählt aus der Gruppe, bestehend aus Terephthalsäure, Dimethylterephtalat (DMT), Polyethylenterephthalat (PET), Phthalsäure, Phthalsäure-Anhydrid (PSA) und Isophthalsäure. Besonders bevorzugt enthält die Komponente (b1.1) Phthalsäure-Anhydrid, Phthalsäure, Terephthalsäure oder Polyethylenterephthalat (PET) und insbesondere Phthalsäure-Anhydrid oder Terephthalsäure, im speziellen Phthalsäure-Anhydrid. Im Allgemeinen kann Komponente (b1.1) auch aliphatische Dicarbonsäuren oder -aliphatische Dicarbonsäure-Derivate enthalten. Falls aliphatische Dicarbonsäuren Verwendung finden, sind diese im Allgemeinen zu 0,5 - 30 Mol-%, bevorzugt zu 0,5 bis 10 Mol-%, jeweils bezogen auf die Komponente (b1.1) enthalten. Als aliphatische Dicarbonsäuren werden vorzugsweise Adipinsäure oder Dicarbonsäure-Gemische aus Bernstein-, Glutar- und Adipinsäure verwendet. Bevorzugt enthält die Dicarbonsäure-Zusammensetzung (b1.1) keine aliphatischen Dicarbonsäuren oder Derivate derselben und besteht somit zu 100 Mol-% aus einer oder mehreren aromatischen Dicarbonsäuren oder deren Derivaten.

Im Allgemeinen wird Komponente (b1.1) in Mengen von 10 bis 50 Mol-%, bevorzugt in Mengen von 20 bis 45 Mol-%, bezogen auf die zur Herstellung des aromatischen Polyesterpolyols (b1) verwendeten Komponenten (b1.1), (b1.2), (b1.3) und (b1.4), eingesetzt.

Zur Herstellung des aromatischen Polyesterpolyols (b1) können auch eine oder mehrerer Fettsäuren und/oder Fettsäurederivate (b1.2), verwendet werden. Die Säuren und/oder Fettsäurederivate können dabei sowohl einen biologischen als auch einen petrochemischen Ursprung haben. Beispiele für Fettsäuren sind Capronsäure, Caprylsäure, Caprinsäure, Laurinsäure, Myristinsäure, Miyristoleinsäure, Palmitinsäure, Palmitoleinsäure, Stearinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure, Rizinolsäure und deren Gemische. Beispiele für Fettsäurederivate sind Glycerin-Ester von Fettsäuren wie z.B. Rizinusöl, Weintraubenkernöl, schwarzes Kümmelöl, Kürbiskernöl, Borretschsamen-Öl, Sojabohnen-Öl, Weizensamen-Öl, Raps-Öl, Sonnenblumenkern-Öl, Erdnuss-Öl, Aprikosenkern-Öl, Pistazien-Öl, Mandel-Öl, Oliven-Öl, Macadamia-Öl, Avocado-Öl, Sanddorn-Öl, SesamÖl, Hanf-Öl, Haselnuss-Öl, Primel-Öl, Wildrosen-Öl, Distel-Öl, Walnuss-Öl.

Weitere Beispiele für Fettsäurederivate sind Hydroxyl-modifizierte Fette oder Fettsäuren, hydrierte Fette oder Fettsäuren, epoxidierte Fette oder Fettsäuren, Alkylverzweigte Fette oder Fettsäuren, Fettsäureamide, tierischer Talg wie beispielsweise Rindertalg, Alkyl- oder im speziellen Methylester von Fettsäuren wie Biodiesel.

Im Allgemeinen wird Komponente (b1.2) in Mengen von 0 bis 20 Mol-%, bevorzugt in Mengen von 5 bis 15 Mol-%, besonders bevorzugt in Mengen von 6 bis 10 Mol-%, bezogen auf alle zur Herstellung des aromatischen Polyesterpolyols (b1) verwendeten Komponenten (b1.1) bis (b1.4), eingesetzt.

In einer besonders bevorzugten Ausführungsform der vorliegenden Erfindung ist die Fettsäure oder das Fettsäurederivat (b1.2) Ölsäure, Biodiesel, Sojaöl, Rapsöl oder Talg, insbesondere Ölsäure oder Biodiesel, im speziellen Ölsäure und wird in einer Menge von 5 bis 15 Mol-% verwendet. Die Fettsäure oder das Fettsäurederivat verbessert unter anderem die Treibmittellöslichkeit bei der Herstellung von Polyurethan- oder Polyisocyanurat-Hartschaumstoffen. Ganz besonders bevorzugt umfasst Komponente (b1.2) kein Triglycerid, insbesondere kein Öl oder Fett. Das durch die Veresterung bzw. Umesterung freiwerdende Glycerin aus dem Triglycerid verschlechtert die Maßhaltigkeit des Hartschaums.

Als Komponente (b1.3) wird ein oder mehre aliphatische oder cycloaliphatische Diole mit 2 bis 18 C-Atomen oder deren Alkoxylate eingesetzt. Vorzugsweise enthält Komponente (b1.3) mindestens eine Verbindung, aus der Gruppe, bestehend aus Ethylenglykol, Diethylenglycol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylate derselben. Besonders bevorzugt ist das aliphatische Diol (b1.3) Monoethylenglykol oder Diethylenglycol, insbesondere Diethylenglycol. Im Allgemeinen wird Komponente (b1.3) in Mengen von 10 bis 80 Mol-%, bevorzugt in Mengen von 20 bis 75 Mol-%, besonders bevorzugt in Mengen von 30 bis 60 Mol-%, bezogen auf alle zur Herstellung des aromatischen Polyesterpolyols (b1) verwendeten Komponenten, eingesetzt.

Als höherfunktionelles Polyol (b1.4) können zur Herstellung des aromatischen Polyesterpolyols (b1) beliebige Polyole mit einer Funktionalität von größer als 2 eingesetzt werden. Vorzugsweise ist das höherfunktionelle Polyol (b1.4) ausgewählt aus der Gruppe bestehend aus Glycerin, alkoxyliertem Glycerin, Trimethylolpropan, alkoxyliertem Trimethylolpropan, Pentaerythrol, alkoxyliertem Pentaerythrol und Mischungen aus 2 oder mehreren dieser höherfunktionellen Polyole. Besonders bevorzugt ist das höherfunktionelle Polyol (b1.4) Glycerin, alkoxyliertes Glycerin oder Mischungen daraus.

Das Höherfunktionelle Polyol (b1.4) wird in Mengen von 0 bis 50 Mol-%, bevorzugt in Mengen von 5 bis 40 Mol-%, besonders bevorzugt in Mengen von 10 bis 25 Mol-%, bezogen auf alle zur Herstellung des aromatischen Polyesterpolyols (b1) verwendeten Komponenten, eingesetzt. In einer besonders bevorzugten Ausführungsform der vorliegenden Erfindung wird zur Herstellung des aromatischen Polyesters, kein höherfunktionelles Polyol (b1.4) verwendet.

Erfindungsgemäß weist das aromatische Polyesterpolyol (b1) eine zahlengewichtete mittlere Funktionalität von ≥ 1.7 bis ≤ 3.0, bevorzugt von ≥ 1.7 bis ≤ 2.5, besonders bevorzugt von ≥ 1.75 bis ≤ 2.2 auf.

Vorzugsweise weist das aromatische Polyesterpolyol (b1) eine Hydroxylzahl von 190 bis 250 mg KOH/g, bevorzugt von 200 bis 240 mg KOH/g auf.

In einer besonders bevorzugten Ausführungsform weist das aromatische Polyesterpolyol (b1) eine OH Zahl von 190 bis 250 mg KOH/g und eine Funktionalität von 1,7 bis 2,5 auf.

Zur Herstellung des aromatischen Polyesterpolyols (b1) können die Dicarbonsäuren (b1.1), Fettsäuren und/oder Fettsäurederivate (b1.2), die aliphatischen oder cycloaliphatischen Diole mit 2 bis 18 C-Atomen oder Alkoxylate derselben (b1.3) und die höherfunktionellen Polyole (b1.4) katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280 °C, vorzugsweise 180 bis 260 °C, gegebenenfalls unter vermindertem Druck bis zur gewünschten Säurezahl, die vorteilhafterweise kleiner als 10 und besonders bevorzugt kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol. Toluol, Xylol oder Chlorbenzol zur azeotropen Abdestillation des Kondensationswassers durchgeführt werden.

Im Allgemeinen ist der Anteil der erfindungsgemäßen Polyesterpolyole (b1) mindestens 20 Gew. -%, bevorzugt mindestens 30 Gew. -%, besonders bevorzugt mindestens 40 Gew. -% und im Speziellen mindestens 50 Gew. -% bezogen auf die Summe der Komponenten (B) bis (F).

Erfindungsgemäß enthält Komponente (B) neben dem Polyesterpolyol (b1) mindestens ein Polyetherpolyol (b2), welches eine Hydroxylzahl von 160 - 350 mg KOH/g besitzt und durch Alkoxylierung eines Starters oder Startergemisches hergestellt wird, wobei als Alkyenoxid zur Herstellung von Polyetherpolyol (b2) bevorzugt mindestens 80 Gew.-% Ethylenoxid eingesetzt wird und Polyetherpolyol (b2) mindestens 90 %, vorzugsweise mindestens 95%, besonders bevorzugt mindestens 99% und insbesondere ausschließlich primäre Hydroxyl-Endgruppen aufweist.

Die Polyetherpolyole (b2) werden nach bekannten Verfahren, beispielsweise durch anionische Polymerisation von einem oder mehreren Alkylenoxiden mit 2 bis 4 Kohlenstoffatomen, enthaltend Ethylenoxid, mit üblichen Katalysatoren, wie Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazol-Derivate, unter Verwendung mindestens eines Startermoleküls oder Startermolekülgemisches, das im Mittel ≤ 3.5 und ≥ 1.5, vorzugsweise ≤ 3.0 und ≥ 2.0, und besonders bevorzugt 2 reaktive Wasserstoffatome gebunden enthält, hergestellt. Neben der anionischen Polymerisation der Startermoleküle kann die Herstellung auch anhand kationischer Polymerisation erfolgen, wobei als Katalysatoren Lewis-Säuren, wie Antimonpentachlorid, Borfluorid-Etherat oder Bleicherde, eingesetzt werden.

Bevorzugte Alkoxylierungskatalysatoren sind KOH und aminische Alkoxylierungs-Katalysatoren. Da bei Verwendung von KOH als Alkoxylierungs-Katalysator der Polyether zunächst neutralisiert werden muss und das entstehende Kaliumsalz abgetrennt werden muss, ist die Verwendung von aminischen Alkoxylierungs-Katalysatoren besonders bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

Geeignete Alkylenoxide sind neben Ethylenoxid beispielsweise Tetrahydrofuran, 1,3 bzw. 1,2-Propylenoxid, 1,2- bzw. 2,3-Butylenoxid, Styroloxid und vorzugsweise 1,2-Propylenoxid. In einer besonders bevorzugten Ausführung wird als Alkylenoxid ausschließlich Ethylenoxid eingesetzt. Die Alkylenoxide können einzeln, alternierend nacheinander oder als Mischungen verwendet werden. Erfindungsgemäß wird als Alkylenoxid zur Herstellung von Polyetherpolyol (b2) mindestens 80 Gew.-% Ethylenoxid, bevorzugt mindestens 90 Gew.-% Ethylenoxid, besonders bevorzugt mindestens 95 Gew.-% und im speziellen mindestens 98 Gew.-% Ethylenoxid eingesetzt. Als Alkylenoxid zur Herstellung des erfindungsgemäßen Polyetherpolyols (b2) wird ganz besonders bevorzugt ausschließlich Ethylenoxid verwendet, d.h. die Gewichtsmenge von Ethylenoxid am Gesamtgewicht Alkylenoxid in Komponente (b2) beträgt in dieser Ausführungsform 100 Gew.-%. Sollte Ethylenoxid in einer Mischung mit anderen Alkylenoxiden eingesetzt werden, so ist erfindungsgemäß sicherzustellen, dass das daraus hergestellte Polyoletherpolyol den erfindungsgemäßen Gehalt an primären Hydroxyl-Endgruppen aufweist.

Als Startermoleküle kommen beispielsweise in Betracht: Wasser, organische Dicarbonsäuren, wie Bernsteinsaure, Adipinsäure, Phthalsäure und Terephthalsäure, aliphatische und aromatische, gegebenenfalls N-mono-, N, N- und N, N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, bevorzugt Ethylendiamin. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl und N-Ethyldiethanolamin, und Trialkanolamine, wie z.B. Triethanolamin, und Ammoniak.

Bevorzugt verwendet werden zwei oder mehrwertige Alkohole, wie Ethandiol, Propandiol-1,2 und -1,3, Diethylenglycol (DEG), Dipropylenglycol, Butandiol-1,4, Hexandiol-1,6, Glycerin, Trimethylolpropan, Bisphenol-A, Bisphenol-F, Pentaerythritol, Sorbit und Saccharose, besonders bevorzugt werden Diethylenglycol, Mono-Ethylenglycol, Propandiol-1,2 und Glycerin, im speziellen Diethylenglycol.

In einer bevorzugten Ausführungsform enthalten die Startermoleküle keine Fettsäuren.

Erfindungsgemäß besitzt das Polyetherpolyol (b2) eine Hydroxylzahl von 160 - 350 mg KOH/g, bevorzugt von 170 - 290 mg KOH/g, besonders bevorzugt 175 - 225 mg KOH/g.

Im Allgemeinen beträgt der Anteil der Komponente (b2) von 20 bis 45 Gew.-%, bevorzugt von 25 bis 40 Gew.-%, besonders bevorzugt von 30 bis 38 Gew.-%, bezogen auf die Summe der Gewichtsmengen von Komponente (B) bis (F).

Erfindungsgemäß ist das Massenverhältnis der Komponente (b1) zu Komponente (b2) ≤ 3 und ≥ 1, bevorzugt ≤ 2,5 und ≥ 1,15 und besonders bevorzugt ≤ 2,0 und ≥ 1,3.

Erfindungsgemäß ist die Summe der Massenanteile von Komponente (b1) und Komponente (b2) bezogen auf Komponente (B) > 80 Gew.-%, bevorzugt > 90 Gew.-%, besonders bevorzugt > 95 Gew.-%. Ganz besonders bevorzugt ist die Summe der Massenanteile von Komponente (b1) und Komponente (b2) bezogen auf die Komponente (B) 100 Gew.-%, d.h. es werden in dieser Ausführungsform keine weiteren Verbindungen mit gegenüber Isocyanat-Gruppen reaktiven Wasserstoffatomen eingesetzt als Komponente (b1) und Komponente (b2).

### Komponente (C)

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden. Verbindungen die Phosphor-, Chlor- oder Brom-Atome enthalten, die auch gegenüber Isocyanat reaktive Gruppen aufweisen, werden dabei im Rahmen der vorliegenden Erfindung nicht als Verbindungen mit gegenüber Isocyanat-Gruppen reaktiven Wasserstoffatomen (B) angesehen und nicht bei der Berechnung von Mengenverhältnissen der Komponente (B) zugehörig angesehen.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyisocyanurat-Hartschaumstoffe verwendet werden. Bevorzugte Flammschutzmittel weisen keine gegenüber Isocyanat-Gruppen reaktive Gruppen auf. Vorzugsweise sind die Flammschutzmittel bei Raumtemperatur flüssig. Bevorzugt sind TCPP, DEEP, TEP, DMPP und DPK, besonders bevorzugt TCPP und TEP, insbesondere TCPP.

Im Allgemeinen beträgt der Anteil der Flammschutzmittel (C) 1 bis 20 Gew.-%., bevorzugt 2 bis 15 Gew.-%, besonders bevorzugt 3 bis 10 Gew.-% bezogen auf die Summe der Gewichtsmengen von Komponente (B) bis (F).

Vorzugsweise umfasst Komponente (C) ein phosphorhaltiges Flammschutzmittel und der Gehalt an Phosphor, bezogen auf das Gesamtgewicht der Komponenten (A) bis (F), beträgt < 0.4 Gew.-%, bevorzugt < 0.3 Gew.-% und besonders bevorzugt < 0,2 Gew.-%.

### Komponente (D)

Zu Treibmitteln (D), welche zur Herstellung der erfindungsgemäßen Polyisocyanurat-Hartschaumstoffe verwendet werden, gehören Ameisensäure und Ameisensäure-Wassermischungen. Diese reagieren mit Isocyanat-Gruppen unter Bildung von Kohlendioxid und Kohlenstoffmonoxid. Da diese Treibmittel das Gas durch eine chemische Reaktion mit den Isocyanat-Gruppen freisetzen, werden sie als chemische Treibmittel bezeichnet. Daneben werden physikalische Treibmittel, wie niedrig siedende Kohlenwasserstoffe, eingesetzt. Als physikalische Treibmittel geeignet sind insbesondere Flüssigkeiten, welche gegenüber den Polyisocyanaten (A) inert sind und Siedepunkte unter 100 °C, vorzugsweise unter 50 °C, bei Atmosphärendruck aufweisen, so dass sie unter dem Einfluss der exothermen Polyadditionsreaktion verdampfen.

Als physikalische Treibmittel eingesetzt werden können beispielsweise Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte gesättigte und ungesättigte Kohlenwasserstoffe, wie Methylenchlorid, Dichlormonofluormethan, Difluormethan, Trifluormethan, Difluorethan, Tetrafluorethan, Chlordifluorethan, 1,1-Dichlor-2,2,2-trifluorethan, 2,2-Dichlor-2-fluorethan und Heptafluorpropan, und ungesättigte Kohlenwasserstoffe, wie Trifluorpropene und Tetrafluorpropene, wie (HFO-1234), Pentafluorpropene, wie (HFO-1225), Chlortrifluorpropene, wie (HFO-1233), Chlordifluorpropene, Chlorotetrafluorpropene und Hexafluorbutene, sowie Mischungen aus einer oder mehreren dieser Komponenten. Bevorzugt sind Tetrafluorpropene, Pentafluorpropene, Chlortrifluorpropene und Hexafluorbutene, wobei das ungesättigte, terminale Kohlenstoffatom mindestens einen Chlor- oder Fluorsubstituenten trägt. Beispiele sind 1,3,3,3-Tetrafluorpropen (HFO-1234ze); 1,1,3,3-Tetrafluorpropen; 1,2,3,3,3-Pentafluorpropen (HFO-1225ye); 1,1,1-Trifluorpropen; 1,1,1,3,3-Pentafluorpropen (HFO-1225zc); 1,1,2,3,3-Pentafluorpropen (HFO-1225yc); 1-Chlor-2,3,3,3-tetrafluorpropen (HFO-1224yd); 1,1,1,2,3-Pentafluorpropen (HFO-1225yez); 1-Chlor-3,3,3-trifluorpropen (HCFO-1233zd); 1,1,1,4,4,4-Hexafluorbut-2-en (HFO-1336mzz). Auch Gemische dieser niedrigsiedenden Flüssigkeiten untereinander und/oder mit anderen substituierten oder unsubstituierten Kohlenwasserstoffen können verwendet werden.

Geeignet sind ferner organische Carbonsäuren, wie z.B. Ameisensäure, Essigsäure, Oxalsäure, Rizinolsäure und Carboxylgruppen-haltige Verbindungen.

Vorzugsweise werden keine halogenierten Kohlenwasserstoffe als Treibmittel verwendet. Als chemische Treibmittel werden Ameisensäure-Wasser-Mischungen oder Ameisensäure verwendet. Vorzugsweise werden als physikalische Treibmittel Pentan-Isomere, bzw. Mischungen von Pentan-Isomeren verwendet. Dabei werden die chemischen Treibmittel zusammen mit physikalischen Treibmitteln verwendet, wobei die Verwendung von Ameisensäure-Wasser-Mischungen oder reiner Ameisensäure zusammen mit Pentan-Isomeren oder Gemischen aus Pentan-Isomeren bevorzugt sind.

Die eingesetzte Menge des Treibmittels bzw. der Treibmittelmischung liegt bei 0,1 bis 45 Gew.-%, vorzugsweise 1 bis 30 Gew.-%, besonders bevorzugt 1 bis 20Gew.-% und insbesondere 1,5 bis 20 Gew.-%, jeweils bezogen auf die Summe der Komponenten (B) bis (F).

Ameisensäure oder eine Ameisensäure-Wasser-Mischung wird dabei vorzugsweise in einer Menge von 0,2 bis 10 Gew.-%, insbesondere in einer Menge von 0,5 bis 4 Gew.-% bezogen auf die Komponente (B), eingesetzt. Werden Ameisensäure-Wasser Mischungen eingesetzt ist der Anteil an Ameisensäure, bezogen auf das Gesamtgewicht an Ameisensäure und Wasser, bevorzugt größer als 40 Gew.-%, besonders bevorzugt 50 bis 98 Gew.-%, mehr bevorzugt 70 bis 95 Gew.-% und insbesondere 80 bis 90 Gew.-%. Besonders bevorzugt wird Ameisensäure oder eine Ameisensäure-Wasser-Mischung als chemisches Treibmittel in Kombination mit Pentan eingesetzt.

### Komponente (E)

Als Katalysatoren (E) zur Herstellung der erfindungsgemäßen Polyisocyanurat-Hartschaumstoffe werden insbesondere Verbindungen verwendet, die die Reaktion der reaktiven Wasserstoffatome, insbesondere Hydroxylgruppen, enthaltenden Verbindungen der Komponente (B) bis (F) mit den Polyisocyanaten (A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6,-Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotria-zine, und Triethylendiamin.

Geeignet sind jedoch auch Metallsalze, wie Eisen(II)-chlorid, Zinkchlorid, Bleioctoat und Zinnsalze, wie Zinndioctoat, Zinndiethylhexoat und Dibutylzinndilaurat sowie Mischungen aus tertiären Aminen und Metallsalzen, insbesondere organischen Zinnsalzen. Als Katalysatoren kommen ferner in Betracht: Amidine, wie 2,3-Dimethyl-3,4,5,6-tetrahydropyrimidin, Tetraalkylammoniumhydroxide, wie Tetramethyl-ammoniumhydroxid, Alkalihydroxide, wie Natriumhydroxid und Alkalialkoholate, wie Natriummethylat und Kaliumisopropylat, Alkalicarboxylate, sowie Alkalisalze von langkettigen Fettsäuren mit 8 bis 20 C-Atomen und gegebenenfalls seitenständigen OH-Gruppen.

Weiterhin kommen als Katalysatoren einbaubare Amine in Betracht, d.h. vorzugsweise Amine mit einer -OH, -NH oder -NH2 Funktion, wie beispielsweise Ethylendiamin, Triethanolamin, Diethanolamin, Ethanolamin und Dimethylethanolamin. Einbaubare Katalysatoren können sowohl als Verbindungen der Komponente (B) als auch der Komponente (E) angesehen werden.

Es besteht auch die Möglichkeit, die Reaktionen ohne Katalyse ablaufen zu lassen. In diesem Fall wird üblicherweise die katalytische Aktivität von mit Aminen gestarteten Polyolen ausgenutzt.

Zusätzlich kommen als Katalysatoren für die Trimerisierungsreaktion der überschüssigen -NCO Gruppen untereinander in Betracht: Isocyanuratgruppen bildende Katalysatoren, beispielsweise Ammoniumionen- oder Alkalimetallsalze, speziell Ammonium- oder Alkalimetallcarboxylate, allein oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

In einer bevorzugten Ausführungsform enthält der Katalysator (E) einen Aminkatalysator mit tertiärer Aminogruppe und einen Ammonium- oder Alkalimetallcarboxylatkatalysator. In einer besonders bevorzugten Ausführungsform enthält der Katalysator (E) mindestens einen Aminkatalysator, ausgewählt aus der Gruppe, bestehend aus Pentamethyldiethylentriamin und Bis(2-dimethylaminoethyl)ether und mindestens einen Alkalimetallcarboxylatkatalysator, ausgewählt aus der Gruppe bestehend aus Kaliumformiat, Kaliumacetat und Kalium-2-Ethylhexanoat. Überraschenderweise führt der Einsatz dieser Katalysatoren bei der kontinuierlichen Herstellung von Sandwichelementen, beispielsweise im Doppelband, zu Sandwichelementen, die eine besonders glatte Schaumoberfläche zur Deckschicht, insbesondere zur unteren Deckschicht, aufweisen. Dies führt zu Sandwichelementen mit hervorragender Haftung des Schaumstoffs an der Deckschicht und zu fehlerfreien Oberflächen.

Vorzugsweise verwendet werden 0,001 bis 10 Gew.-teile Katalysator bzw. Katalysatorkombination, bezogen auf 100 Gewichtsteile der Komponente (B).

### Komponente (F)

Der Reaktionsmischung zur Herstellung der erfindungsgemäßen Polyisocyanurat-Hartschaumstoffe können gegebenenfalls noch weitere Hilfsmittel und/oder Zusatzstoffe (F) zugesetzt werden. Genannt seien beispielsweise oberflächenaktive Substanzen, Schaumstabilisatoren, Zellregler, Füllstoffe, Lichtstabilisatoren, Farbstoffe, Pigmente, Hydrolyse-Schutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Rizinusölsulfaten oder von Fettsäuren sowie Salze von Fettsäuren mit Aminen, z.B. Öl-saures Diethylamin, stearinsaures Diethanolamin, Rizinol-saures Diethanolamin, Salze von Sulfonsäuren, z.B. Alkali- oder Ammoniumsalze von Dodecylbenzol- oder Dinaphthylmethandisulfonsäure und Rizinolsäure, Schaumstabilisatoren, wie Siloxanoxyalkylen-Mischpolymerisate und andere Organopolysiloxane und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 10 Gew.-Teile, bezogen auf 100 Gew.-Teile der Komponente (B), angewandt. Als Schaumstabilisatoren können übliche Schaumstabilisatoren, beispielsweise solche auf Silikonbasis, wie Siloxanoxyalkylen-Mischpolymerisate und anderen Organopolysiloxane verwendet werden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrysotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäure-Estern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.- 35 %, vorzugsweise 1 bis 40 Gew.-%, bezogen auf das Gewicht der Komponenten (A) bis (F), zugegeben, wobei jedoch der Gehalt an Matten, Vliesen und Geweben aus natürlichen und synthetischen Fasern Werte bis 80 Gew.-%, bezogen auf das Gewicht der Komponenten (A) bis (F), erreichen kann.

Erfindungsgemäß erfolgt die Herstellung der Polyisocyanurat-Hartschaumstoffe durch Vermischen der Komponenten (A) bis (E) und, falls vorhanden (F), zu einer Reaktionsmischung. Zur Verringerung der Komplexität können auch Vormischungen hergestellt werden. Diese umfassen zumindest eine Isocyanat-Komponente, enthaltend Polyisocyanate (A) und eine Polyolkomponente, enthaltend gegenüber Isocyanat reaktive Verbindungen (B). Der Isocyanat-Komponente und Polyolkomponente können alle oder ein Teil der weiteren Komponenten (C) bis (F) ganz oder teilweise zugegeben werden, wobei aufgrund der hohen Reaktivität der Isocyanate in vielen Fällen die Komponenten (C) bis (F) zur Vermeidung von Nebenreaktionen zur Polyolkomponente zugegeben werden. Insbesondere physikalische Treibmittel können aber auch der Isocyanat-Komponente (A) beigemischt werden. Für gewöhnlich liegen Ameisensäure-Wasser-Mischungen oder Ameisensäure ganz oder teilweise in der Polyolkomponente gelöst vor und das physikalische Treibmittel (beispielsweise Pentan) und gegebenenfalls der Rest des chemischen Treibmittels wird direkt bei der Herstellung "online" dosiert. Vorzugsweise werden die physikalischen Treibmittel in einem extra Strom der Reaktionsmischung online zugeführt und besonders bevorzugt die verbleibenden Komponenten (C), (E) und (F) der Polyolkomponente zugegeben. Für gewöhnlich wird der Katalysator online zudosiert, dieser kann aber auch bereits teilweise oder vollständig in der Polyolkomponente gelöst vorliegen.

Vorzugsweise enthält die Polyolkomponente zur Herstellung der erfindungsgemäßen Polyisocyanurat-Hartschaumstoffe 70 bis 90 Gew. -% der Verbindungen mit mindestens 1,5 gegenüber Isocyanat-Gruppen reaktiven Wasserstoffatomen (B), 2 bis 10 Gew. -% Flammschutzmittel (C), 1 bis 20 Gew. -% Treibmittel (D), 0,5 bis 10 Gew. -% Katalysatoren (E) und 0,0 bis 20 Gew. -% weitere Hilfs- und Zusatzstoffe (F), jeweils bezogen auf das Gesamtgewicht der Komponenten (B) bis (F). In einer besonders bevorzugten Ausführungsform addieren sich die Anteile der Komponenten (B) bis (F) zu 100 Gew. %.

Anschließend erfolgt ein Ausreagieren lassen der Reaktionsmischung zum Polyisocyanurat-Hartschaumstoff. Dabei wird im Rahmen der vorliegenden Erfindung unter einer Reaktionsmischung die Mischung der Polyisocyanate (A) mit den gegenüber Isocyanat reaktiven Verbindungen (B) und allen weiteren Komponenten (C), (D), (E) und optional (F), bei Reaktionsumsätzen kleiner 90 %, bezogen auf die Isocyanat-Gruppen, bezeichnet.

Dabei erfolgt die Vermischung der Komponenten zur Reaktionsmischung bei einem Isocyanatindex von 220 bis 1000, vorzugsweise bei 260 bis 800, bevorzugt bei 300 bis 600, besonders bevorzugt bei 340 bis 500. Dabei werden die Ausgangskomponenten bei einer Temperatur von 15 bis 90 °C, vorzugsweise 20 bis 60 °C, insbesondere 20 bis 45 °C, gemischt. Das Reaktionsgemisch kann durch Mischen in Hoch- oder Niederdruck- Dosiermaschinen vermischt werden.

Die Reaktionsmischung kann zum Ausreagieren beispielsweise in eine Form eingebracht werden. Nach dieser Technologie werden z.B. diskontinuierliche Sandwichelemente hergestellt. Die erfindungsgemäßen Hartschäume werden vorzugsweise auf kontinuierlich arbeitenden Doppelbandanlagen hergestellt. Dabei werden die Polyol- und Isocyanat-Komponenten mit einer Hochdruckmaschine dosiert und in einem Mischkopf gemischt. Katalysatoren und/oder Treibmittelkönnen zuvor mit separaten Pumpen in die Polyolmischung dosiert werden. Das Reaktionsgemisch wird auf eine sich kontinuierlich bewegende, untere Deckschicht aufgetragen. Die untere Deckschicht mit dem Reaktionsgemisch und die obere Deckschicht treten in das Doppelband ein, in dem das Reaktionsgemisch aufschäumt und aushärtet. Nach dem Verlassen des Doppelbandes wird der Endlosstrang in die gewünschten Abmessungen geschnitten. Auf diese Weise lassen sich Sandwichelemente mit metallischen Deckschichten oder mit flexiblen Deckschichten herstellen. Als untere und obere Deckschichten, die gleich oder unterschiedlich sein können, können flexible oder starre Deckschichten verwendet werden, die üblicherweise im Doppelbandverfahren eingesetzt werden. Dazu gehören Metalldeckschichten wie Aluminium oder Stahl, Bitumendeckschichten, Papier, Vliesstoffe, Kunststoffplatten wie Polystyrol, Kunststofffolien wie Polyethylen Folien oder Holzdeckschichten. Die Deckschichten können auch beschichtet sein, zum Beispiel mit einem herkömmlichen Lack oder einem Haftvermittler. Besonders bevorzugt werden Deckschichten eingesetzt, die diffusionsdicht gegenüber dem Zellgas des Polyisocyanurat-Hartschaumstoffs sind.

Solche Verfahren sind bekannt und beispielsweise beschrieben im "Kunststoffhandbuch, Band 7, Polyurethane", Carl Hanser Verlag, 3. Auflage 1993, Kapitel 6.2.2 oder EP 2234732. Schließlich ist Gegenstand der vorliegenden Erfindung ein Polyisocyanat-basierter Hartschaumstoff, erhältlich nach einem erfindungsgemäßen Verfahren und ein Polyurethan-Sandwichelement, enthaltend einen solchen erfindungsgemäßen Polyisocyanat-basierten Hartschaumstoff.

Ein erfindungsgemäßer Polyisocyanat-basierter Hartschaumstoff zeichnet sich durch hervorragende mechanische Eigenschaften, insbesondere eine hervorragende Druckfestigkeit bei gleichzeitig reduzierter Oberflächensprödigkeit aus, was sich insbesondere bei der Herstellung von Sandwichelementen im kontinuierlichen Doppelbandverfahren durch eine verbesserte Deckschichtanhaftung bemerkbar macht. Zusätzlich weisen die erfindungsgemäßen Polyisocyanat-basierten Hartschaumstoffe auch unter Verwendung von geringen Mengen an ökologisch und toxikologisch bedenklichen Flammschutzmitteln, hervorragende Brandfestigkeiten auf. Außerdem ermöglichen es die zur Herstellung des erfindungsgemäßen Polyisocyanat-basierten Hartschaumstoffs verwendeten Reaktionsmischungen bei Verwendung von geringeren Mengen an ökologisch und toxikologisch bedenklichen Katalysatoren die geforderten Reaktivitäten bei einer verbesserten Schaum-Durchhärtung zu erreichen.

Im Folgenden soll die Erfindung anhand von Beispielen verdeutlicht werden:

### Beispiele

Es wurden die nachstehenden Einsatzstoffe eingesetzt:
Polyesterol 1: Veresterungsprodukt aus Phthalsäure-Anhydrid, Ölsäure und Diethylenglycol mit einer mittleren Hydroxylfunktionalität von 1.75, einer Hydroxylzahl von 215 mg KOH/g und einem Ölsäuregehalt von 15 Gew.-%.
Polyesterol 2: Veresterungsprodukt aus Terephthalsäure, Ölsäure, Glyzerin und Diethylenglycol mit einer mittleren Hydroxylfunktionalität von 2.3, einer Hydroxylzahl von 245 mg KOH/g und einem Ölsäuregehalt von 18 Gew.-%.
Polyesterol 3: Veresterungsprodukt aus Phthalsäure-Anhydrid und Diethylenglycol mit einer Hydroxylfunktionalität von 2.0, und einer Hydroxylzahl von 240 mg KOH/g.
Polyetherol 1: Polyetherpolyol, hergestellt durch Ethoxylierung von Ethylenglycol, mit einer Hydroxylfunktionalität von 2 und einer Hydroxylzahl von 190 mg KOH/g
Polyetherol 2: Polyetherpolyol, hergestellt durch Ethoxylierung von Ethylenglycol, mit einer Hydroxylfunktionalität von 2 und einer Hydroxylzahl von 225 mg KOH/g
Polyetherol 3: Polyetherpolyol, hergestellt durch Ethoxylierung von Ethylenglycol, mit einer Hydroxylfunktionalität von 2 und einer Hydroxylzahl von 280 mg KOH/g
Polyetherol 4: Polyetherpolyol, hergestellt durch Ethoxylierung von Ethylenglycol, mit einer Hydroxylfunktionalität von 2 und einer Hydroxylzahl von 750 mg KOH/g
Polyetherol 5: Polyetherpolyol, hergestellt durch Ethoxylierung von Glycerin, mit einer Hydroxylfunktionalität von 3 und einer Hydroxylzahl von 250 mg KOH/g
Polyetherol 6: Polyetherpolyol, hergestellt durch Propoxylierung von Propylenglykol, mit einer Hydroxylfunktionalität von 2 und einer Hydroxylzahl von 250 mg KOH/g
Polyetherol 7: Polyetherpolyol, hergestellt durch Propoxylierung einer Mischung aus Saccharose und Glycerin, mit einer Hydroxylfunktionalität von 4.3 und einer Hydroxylzahl von 490 mg KOH/g.
Polyetherol 8: Polyetherpolyol, hergestellt durch Ethoxylierung einer Mischung aus Saccharose und Glycerin, mit einer Hydroxylfunktionalität von 4.8 und einer Hydroxylzahl von 480 mg KOH/g
Polyetherol 9: Polyetherpolyol, bestehend aus 94 Gew.-% Ethylenoxid und 6 Gew.-% Propylenoxid, mit ausschließlich primären Hydroxylendgruppen, einer Funktionalität von 2 und einer Hydroxylzahl von 190 mg KOH/g.
Polyetherol 10: Polyetherpolyol, hergestellt durch Ethoxylierung von Ethylenglycol, mit einer Hydroxylfunktionalität von 2 und einer Hydroxylzahl von 115 mg KOH/g
Flammschutzmittel: Tris(2-chlorisopropyl)phosphat (TCPP)
Schaumstabilisator: Tegostab B 8467 (Silikonhaltiger Schaumstabilisator der Firma Evonik) Katalysator A: Katalysator bestehend aus 16.8 Gew.-% Bis(2-dimethylaminoethyl)ether, 76 Gew.-% Polyetherol 6 und 7.2 Gew.-% Dipropylenglycol.
Katalysator B: Katalysator bestehend aus 40 Gew.-% Kaliumformiat, 54 Gew.-% Mono-Ethylenglycol und 6 Gew.-% Wasser.
Treibmittel A: Treibmittelmischung bestehend aus 85 Gew.-% Ameisensäure und 15 Gew.-% Wasser.
Treibmittel B: Treibmittelmischung bestehend aus 80 mol-% n-Pentan und 20 mol-% iso-Pentan.
Treibmittel C: Wasser
PMDI: Polymeres Diphenylmethandiisocyanat (Lupranat M50 der Firma BASF)

Mit Hilfe der beschriebenen Einsatzstoffe wurden die in der Tabelle 1 und 2 beschriebenen Polyolkomponenten, bestehend aus Polyesterol 1 - 3, Polyetherol 1 - 10, Flammschutzmittel und Schaumstabilisator hergestellt.

### Prüfung auf Phasenstabilität und Fließfähigkeit der Polyolkomponente

Die so hergestellten Polyolkomponenten wurden auf Phasenstabilität und Fließfähigkeit bei 20°C überprüft, indem eine kleine Menge Polyolkomponente direkt nach der Herstellung in ein transparentes Fläschchen gefüllt und über mehrere Tage beobachtet wurde.

### Verschäumung der Polyolkomponenten zu Hartschäumen mit vergleichbaren Kennzahlen, Reaktivitäten und Schaumdichten

Außerdem wurden die Polyolkomponenten mit Hilfe von PMDI in einem solchen Mischungsverhältnis zur Reaktion gebracht, dass der Isocyanatindex aller hergestellten Schäume 340 ± 10 betrug. Hierbei wurde die Menge an Flammschutzmittel und die Menge and Schaumstabilisator in der Polyolkomponente so gewählt, dass, bezogen auf den Schaum, die Menge an Flammschutz- und Schaumstabilisator-identisch war.. Weiterhin wurde die Menge an brennbarem Treibmittel B und Trimerisierungs-Katalysator B so gewählt, dass auch der Gehalt dieser Verbindungen, bezogen auf den Schaum, identisch waren. Durch Variation von Treibmittel A bzw. Treibmittel C und Katalysator A wurden anschließend alle Schäume auf vergleichbare Abbindezeiten von 55 s ± 2 s und Becherschaumdichten von 41 kg/m³ ± 1 kg/m³ eingestellt. Dazu wurden 80 g Reaktionsmischung in einem Pappbecher intensiv mit einem Labor Rührer bei 1400 Umdrehungen/min vermischt.

Die so auf vergleichbare Abbindezeiten und Dichten eingestellten Reaktionsmischungen wurden anschließend verwendet, um Oberflächenhärtungen und Schaumsprödigkeiten zu bestimmen, sowie um Hartschaumblöcke für weitere Untersuchungen herzustellen.

### Oberflächenhärtung und Schaumsprödigkeitsmessung

Die Oberflächenhärtung der auf identische Reaktionszeiten und Schaumdichten eingestellten Laborschäume wurde mit dem Bolzentest ermittelt. Dazu wurde 2.5; 3; 4; 5; 6 und 7 Minuten nach intensiver Vermischung von 80 g Reaktionskomponenten (bei 1500 U/min) in einem 1.15 Liter Polystyrol-Becher, ein Stahlbolzen mit einer Kugelkalotte von 10 mm Radius mit einer Zug/Druckprüfmaschine 10 mm tief in den Schaumpilz eingedrückt. Die dafür erforderliche Maximalkraft in N ist ein Maß für die Härtung des Schaumstoffs zum jeweiligen Zeitpunkt. Jede Härtungsmessungen erfolgte an einer frischen Schaumstelle im gleichen Abstand zur Schaumkante.

Als Maß für die Sprödigkeit des Polyisocyanurat-Hartschaumstoffes wurde der Zeitpunkt ermittelt, bei dem die Oberfläche des Hartschaums beim Bolzentest sichtbare Bruchzonen aufwies (Bruch beim Bolzentest). Je früher ein sichtbarer Bruch erkennbar ist, desto spröder ist der Schaum. Ein Schaumbruch in der Härtungsprüfung ist in Tabelle 1 und 2 an einem C (=Crack) zu erkennen.

Zusätzlich dazu wurde die Sprödigkeit 8 Minuten nach Vermischung der Reaktionskomponenten durch Drücken an der seitlichen Oberkante des Schaums subjektiv bestimmt (Sprödigkeit subjektiv) und gemäß einem Notensystem von 1 bis 5 beurteilt. 1 bedeutet, dass der Schaum kaum spröde ist, 5 bedeutet, dass der Schaum eine sehr hohe Sprödigkeit aufweist.

Die Schaumsprödigkeit wurde anhand eines Notensystems entsprechend der nachfolgenden Kriterien bewertet:
- 1.: Keine Sprödigkeit: Beim Eindrücken des Schaums sind kein Schaumrisse sichtbar und keine Knackgeräusche wahrnehmbar
- 2.: Leichte Sprödigkeit: Beim Eindrücken des Schaums sind kein Schaumrisse sichtbar, aber leichte Knackgeräusche wahrnehmbar.
- 3.: Mittlere Sprödigkeit: Beim Eindrücken des Schaums sind feine Schaumrisse sichtbar und es lassen sich deutliche Knackgeräusche wahrnehmen
- 4.: Hohe Sprödigkeit: Beim Eindrücken des Schaums sind deutliche Schaumrisse sichtbar und es lassen sich deutliche Knackgeräusche wahrnehmen.
- 5.: Hohe Sprödigkeit: Beim Eindrücken des Schaums sind deutliche Schaumrisse inkl. Materialabplatzungen sichtbar und es lassen sich deutliche Knackgeräusche wahrnehmen.

### Kleinbrennertest entsprechend EN-ISO 11925-2

260 g des auf identische Reaktionszeiten und Schaumdichten eingestellten Reaktionsgemisches, wurden in einem Pappbecher mit Hilfe eines Labor-Rührers intensiv bei 1500 U/min für 10 Sekunden verrührt und in eine Kastenform mit den Innenmaßen 25 cm x 15 cm x 22 cm (Länge x Breite x Höhe) überführt. 24 Stunden, nach Aushärtung des Reaktionsgemisches wurde der entstandene Hartschaumblock entformt und an allen Rändern um 3 cm gekürzt. Die mit den Maßen: 190 x 90 x 20 mm entnommenen Prüfkörper wurden anschließend für 24 Stunden bei 20°C und 65 % Luftfeuchtigkeit konditioniert. Aus jedem Hartschaumblock wurden 5 Prüfkörper entnommen und entsprechend DIN EN-ISO 11925-2 mittels Kantenbeflammung an der 90 mm Seite getestet. Der Mittelwert der Flammenhöhen ist als "Ø Flammenhöhe, EN-ISO 11925-2" in Tabelle 1 und 2 angegeben.

### Bestimmung der Druckfestigkeiten:

350 g des auf identische Reaktionszeiten und Schaumdichten eingestellten Reaktionsgemisches wurden zur Herstellung von Schaumblöcken in einem Kunststoffeimer mit einem Durchmesser von 21 cm und einer Höhe von 20 cm umgesetzt, indem die Mischung für 10 Sekunden intensiv mit einem Labor-Rührer bei 1500 U/min vermischt wurde.

Aus den Schaumblöcken wurden anschließend 9 Prüfkörper mit den Maßen 50 mm x 50 mm x 50 mm zur Bestimmung der Druckfestigkeit nach DIN EN 826 entnommen. Die Entnahme erfolgte immer an gleichen Stellen. Von den 9 Prüfkörpern wurden 3 Prüfkörper so gedreht, dass die Prüfung entgegen der Steigrichtung des Schaums stattfand (Top). Von den 9 Prüfkörpern wurden 3 Prüfkörper so gedreht, dass die Prüfung senkrecht zur Steigrichtung des Schaums stattfand (in X-Richtung). Von den 9 Prüfkörpern wurden 3 Prüfkörper so gedreht, dass die Prüfung senkrecht zur Steigrichtung des Schaums stattfand (in Y-Richtung). Aus allen Messergebnissen wurde anschließend ein Mittelwert gebildet, der in Tabelle 1 und 2 als "Druckfestigkeit Ø" angegeben ist.

**Tabelle 1: Beispiele 1 -7**

| | | Beispiel | Beispiel | Beispiel | Beispiel | Beispiel | Beispiel | Beispiel |
|---|---|---|---|---|---|---|---|---|
| | | 1 | 2 | 3 | 4 | 5 | 6 | 7 |
| Polyesterol 1 | Teile | 55 | | | 54,5 | 54,65 | 54,4 | 55 |
| Polyesterol 2 | Teile | | 54,65 | | | | | |
| Polyesterol 3 | Teile | | | 54,65 | | | | |
| Polyetherol 1 | Teile | 35 | 34,75 | 34,75 | 34,65 | | | |
| Polyetherol 2 | Teile | | | | | 34,75 | | |
| Polyetherol 3 | Teile | | | | | | 34,55 | |
| Polyetherol 4 | Teile | | | | | | | |
| Polyetherol 5 | Teile | | | | | | | |
| Polyetherol 6 | Teile | | | | | | | |
| Polyetherol 7 | Teile | | | | | | | |
| Polyetherol 8 | Teile | | | | | | | |
| Polyetherol 9 | Teile | | | | | | | 35 |
| Polyetherol 10 | Teile | | | | | | | |
| Flammschutzmittel | Teile | 8 | 8,5 | 8,5 | 8,7 | 8,5 | 8,85 | 8 |
| Schaumstabilisator | Teile | 2 | 2,1 | 2,1 | 2,15 | 2,1 | 2,2 | 2 |
| Polyolkomponente | Teile | 100 | 100 | 100 | 100 | 100 | 100 | 100 |
| | | | | | | | | |
| PMDI | Teile | 220 | 240 | 240 | 250 | 240 | 255 | 220 |
| | | | | | | | | |
| Katalysator B | Teile | 1,4 | 1,5 | 1,5 | 1,5 | 1,5 | 1,55 | 1,4 |
| Treibmittel A | | X | X | X | X | X | X | X |
| Treibmittel B | Teile | 11,5 | 12,3 | 12,3 | 12,2 | 12,2 | 12,8 | 11,5 |
| Treibmittel C | | | | | | | | |
| | | | | | | | | |
| Verhältnis Polyesterol/ Polyetherol | | 1,57 | 1,57 | 1,57 | 1,57 | 1,57 | 1,57 | 1,57 |
| Katalysator B in Schaum | Gew.-% | 0,41 | 0,41 | 0,42 | 0,42 | 0,42 | 0,41 | 0,41 |
| Treibmittel B in Schaum | Gew.-% | 3,40 | 3,40 | 3,42 | 3,39 | 3,40 | 3,42 | 3,4 |
| Flammschutzmittel in Schaum | Gew.-% | 2,35 | 2,36 | 2,36 | 2,37 | 2,36 | 2,37 | 2,35 |
| Kennzahl | | 348 | 339 | 349 | 350 | 348 | 338 | 346 |
| Phasenstabil | ja/nein | ja | ja | ja | ja | ja | ja | ja |
| Fließfähig bei 20 °C | ja/nein | ja | ja | ja | ja | ja | ja | ja |
| | | | | | | | | |
| Oberflächenhärtung 2.5 Min | N | 61 | 62 | 72 | 71 | 70 | 76 | 56 |
| Oberflächenhärtung 3 Min | N | 73 | 74 | 82 | 81 | 88 | 89 | 66 |
| Oberflächenhärtung 4 Min | N | 94 | 96 | 103 | 86 | 103 | 108 | 88 |
| Oberflächenhärtung 5 Min | N | 114 | 115 | 124 | 125 | 122 | 128 | 109 |
| Oberflächenhärtung 6 Min | N | 127 | 129 | 134 | 145 | 131 | 120 C | 120 |
| Oberflächenhärtung 7 Min | N | 143 | 141 | 143 | 162 | 133 | 143 C | 131 |
| Ø Oberflächenhärtung | N | 102 | 103 | 110 | 112 | 108 | 111 | 95 |
| Schaumsprödigkeit nach 8 Min | 1-5 | 1 | 2 | 2 | 2 | 1 | 2 | 2 |
| | | | | | | | | |
| Ø Flammenhöhe, EN-ISO 11925-2 | | 11,5 | 10,5 | 9,8 | 11,1 | 11,2 | 12,1 | 10,5 |
| | | | | | | | | |
| Druckfestigkeit Ø | | 0,20 | 0,20 | 0,22 | 0,20 | 0,20 | 0,20 | 0,22 |

| | | | | | | | | |
|---|---|---|---|---|---|---|---|---|
| *X: Verwendung zur Dichteeinstellung* | | | | | | | | |

**Tabelle 2: Vergleichsbeispiele 1 -6**

| | | Vergleich | Vergleich | Vergleich | Vergleich | Vergleich | Vergleich | Vergleich | Vergleich | Vergleich |
|---|---|---|---|---|---|---|---|---|---|---|
| | | 1 | 2 | 3 | 4 | 5 | 6 | 7 | 8 | 9 |
| Polyesterol 1 | Teile | 51,1 | 53,9 | 51,8 | 51,4 | 79,65 | 55,65 | 55 | 54,65 | 79,65 |
| Polyesterol 2 | Teile | | | | | | | | | |
| Polyesterol 3 | Teile | | | | | | | | | |
| Polyetherol 1 | Teile | | | | | 10 | | 35 | | 10 |
| Polyetherol 2 | Teile | | | | | | | | 34,75 | |
| Polyetherol 3 | Teile | | | | | | | | | |
| Polyetherol 4 | Teile | 32,5 | | | | | | | | |
| Polyetherol 5 | Teile | | | | | | | | | |
| Polyetherol 6 | Teile | | 34,3 | | | | | | | |
| Polyetherol 7 | Teile | | | 32,95 | | | | | | |
| Polyetherol 8 | Teile | | | | 32,7 | | | | | |
| Polyetherol 9 | Teile | | | | | | | | | |
| Polyetherol 10 | Teile | | | | | | 35,3 | | | |
| Flammschutzmittel | Teile | 13,2 | 9,5 | 12,2 | 12,7 | 8,3 | 7,2 | 8 | 8,5 | 8,3 |
| Schaumstabilisator | Teile | 3,2 | 2,3 | 3,05 | 3,2 | 2,05 | 1,85 | 2 | 2,1 | 2,05 |
| Polyolkomponente | Teile | 100 | 100 | 100 | 100 | 100 | 100 | 100 | 100 | 100 |
| | | | | | | | | | | |
| PMDI | Teile | 420 | 270 | 370 | 390 | 230 | 190 | 220 | 240 | 230 |
| | | | | | | | | | | |
| Katalysator B | Teile | 2,3 | 1,65 | 2,12 | 2,22 | 1,45 | | 1,4 | 1,5 | 1,45 |
| Treibmittel A | | X | X | X | X | X | X | | | |
| Treibmittel B | Teile | 19 | 13,6 | 17,6 | 18,3 | 12 | | 11,5 | 12,2 | 11,5 |
| Treibmittel C | | | | | | | | X | X | X |
| | | | | | | | | | | |
| Verhältnis Polyesterol/Polyetherol | | 1,57 | 1,57 | 1,57 | 1,57 | 7,97 | 1,57 | 1,57 | 1,57 | 7,97 |
| Katalysator B in Schaum | Gew.-% | 0,41 | 0,41 | 0,41 | 0,41 | 0,41 | - | 0,42 | 0,42 | 0,41 |
| Treibmittel B in Schaum | Gew.-% | 3,41 | 3,39 | 3,41 | 3,4 | 3,42 | - | 3,42 | 3,42 | 3,42 |
| Flammschutzmittel in Schaum | Gew.-% | 2,37 | 2,37 | 2,36 | 2,36 | 2,36 | 2,35 | 2,38 | 2,38 | 2,37 |
| Kennzahl | | 337 | 340 | 341 | 342 | 337 | - | 337 | 335 | 335 |
| | | | | | | | | | | |
| Phasenstabil | ja/nein | ja | ja | ja | nein | ja | nein | Ja | Ja | Ja |
| Fließfähig bei 20 °C | ja/nein | ja | ja | ja | ja | ja | nein | Ja | Ja | Ja |
| | | | | | | | | | | |
| Oberflächenhärtung 2.5 Min | N | 72 | 37 C | 42 C | Starker Schau mschr umpf Nach kurzer Zeit. Keine Messung möglich | 47 | Nicht bei Raumtemperatur verschäu mbar, weil nicht fließfähig. | **47** | **58** | **48** |
| Oberflächenhärtung 3 Min | N | 84 | 47 C | 54 C | | 57 | | **58** | **70** | **59** |
| Oberflächenhärtung 4 Min | N | 100C | 69 C | 73 C | | 77 C | | **73** | **88** | **78 C** |
| Oberflächenhärtung 5 Min | N | 106 C | 87 C | 92 C | | 91 C | | **86** | **100** | **92 C** |
| Oberflächenhärtung 6 Min | N | 111 C | 105 C | 105 C | | 106 C | | **99** | **109** | **107 C** |
| Oberflächenhärtung 7 Min | N | 122 C | 115 C | 110 C | | 116 C | | **101** | **117** | **118 C** |
| Ø Oberflächenhärtung | N | 99 | 77 | 79 | | 82 | | **77** | **90** | **83** |
| Schaumsprödigkeit nach 8 Min | 1-5 | 5 | 5 | 5 | | 5 | | 1 | 1 | 5 |
| | | | | | | | | | | |
| Ø Flammenhöhe, EN-ISO 11925-2 | | 11,5 | 15,8 | 15,2 | | 12,3 | | 11,5 | 11 | 12 |
| | | | | | | | | | | |
| Druckfestigkeit Ø | | 0,21 | 0,19 | 0,21 | | 0,21 | | 0,18 | 0,18 | 0,20 |

| | | | | | | | | | | |
|---|---|---|---|---|---|---|---|---|---|---|
| *X: Verwendung zur Dichteeinstellung* | | | | | | | | | | |

Wie anhand der Tabelle 1 und 2 ersichtlich ist, führt die Kombination aus Polyesterpolyol (b1) und Polyetherpolyol (b2) zu besonders vorteilhaften Polyolkomponenten und Polyisocyanurat-Hartschaumstoffen, wenn das Massenverhältnis der Komponente (b1) zu Komponente (b2) im erfindungsgemäßen Bereich liegt. So sind alle Polyolkomponenten der Beispiele 1 - 7 phasenstabil und fließfähig bei 20 °C. Die Aushärtung der Polyisocyanurat-Hartschäume entsprechend Beispiel 1 - 7 ist gegenüber allen Vergleichsbeispielen überraschenderweise signifikant verbessert, was eine schnellere Verarbeitung auf Produktionsanlagen ermöglicht und somit die Produktivität erheblich erhöht. Überraschenderweise weisen alle Schäume aus Beispiel 1 - 7 zudem eine stark reduzierte Schaumsprödigkeit an der Oberfläche auf, was erfahrungsgemäß zu verbesserten Schaumanhaftungen an Deckschichtmaterialien und zu verbesserter Temperaturwechsel-Belastbarkeit der damit hergestellten Sandwichelemente führt.

Hierbei zeigt sich außerdem, dass alle erfindungsgemäßen Polyisocyanurat-Hartschaumstoffe entsprechend Beispiel 1 - 7 trotz der reduzierten Schaumsprödigkeit immer noch sehr gute Druckfestigkeiten aufweisen. Auch mit wenig Flammschutzmittel bezogen auf den Schaum bestehen alle erfindungsgemäßen Polyisocyanurat-Hartschäume, den Kleinbrennertest mit einer Flammenhöhe < 11.5 cm.

Ein Abweichen von der erfindungsgemäßen Formulierung führt jedoch zu Nachteilen bei den Eigenschaften der Polyolkomponenten oder der Hartschaumstoffe.

So bewirkt beispielsweise eine Erhöhung des Massenverhältnisses von Komponente (b1) zu Komponente (b2) eine deutliche Verschlechterung der Schaumhärtung und eine deutliche Zunahme der Schaumsprödigkeit, sowie eine leichte Verschlechterung der Brandfestigkeit (Vergleichsbeispiel 5).

Ein Austausch des erfindungsgemäßen Polyetherpolyol (b2) auf ein nicht erfindungsgemäßes Polyetherpolyol führt ebenfalls zu einer Verschlechterung. So zeigen Vergleichsbeispiel 1 und Vergleichsbeispiel 6 anhand der verwendeten Polyethylenglycole, dass sich für das Polyetherpolyol (b2) ein optimaler Ethoxylierungsgrad ergibt. Ein zu geringer Ethoxylierungsgrad (Vergleichsbeispiel 1) führt zu einer deutlichen Zunahme der Schaumsprödigkeit. Ein zu hoher Ethoxylierungsgrad (Vergleichsbeispiel 6) führt zu einer Erstarrung der Polyolkomponente bei Raumtemperatur, wodurch keine Verschäumung mehr möglich ist.

Ein Austausch des erfindungsgemäßen überwiegend ethoxylierten Polyetherpolyols (b2) auf ein propoxyliertes Polyetherpolyol (Vergleichsbeispiel 2), führt zu einer starken Verringerung der Schaumhärtung, einer starken Erhöhung der Flammenhöhe nach EN-ISO 11925-2 und einer starken Erhöhung der Schaumsprödigkeit.

Auch der Einsatz von höher funktionellen propoxylierten und ethoxylierten Polyetherpolyolen (Vergleichsbeispiel 3 und 4) führt zu verschlechterten Schaumeigenschaften gegenüber den erfindungsgemäßen Polyetherpolyolen (b2).

In den Vergleichsbeispielen 7 und 8 wurde anstelle der Ameisensäure-Wasser-Mischung (Treibmittel A) der Beispiele 1 und 5, Wasser (chemisches Treibmittel C) als alleiniges chemisches Treibmittel eingesetzt. Das führt jeweils zu einer signifikanten Verschlechterung der Schaumhärtung, zu einer Verschlechterung der Schaumdruckfestigkeiten und zu einer stärkeren Blasenbildung auf der Oberseite der Becherschäume. Ein Tausch auf Wasser als Treibmittel bei nicht erfindungsgemäßen Polyolkomponenten mit einem erhöhten Massenverhältnisses von Komponente (b1) zu Komponente (b2) (Vergleichsbeispiel 9), führt hingegen zu keiner signifikanten Veränderung der Schaumhärtung und der Druckfestigkeit gegenüber Vergleichsbeispiel 5.

Nur mittels der in den Beispielen 1 - 7 beschriebene Kombination der Einsatzstoffe lassen sich Reaktionsmischungen herstellen, die allen Anforderungen gerecht werden.

## Patentansprüche

1. Verfahren zur Herstellung von Polyisocyanurat- Hartschaumstoffen, wobei
(A) Polyisocyanate mit
(B) Verbindungen mit gegenüber Isocyanat-Gruppen reaktiven Wasserstoffatomen
(C) Flammschutzmittel
(D) Treibmittel
(E) Katalysator und
(F) optional weitere Hilfs- und Zusatzstoffe
bei einem Isocyanatindex von mindestens 220 zu einer Reaktionsmischung vermischt und zum Polyisocyanurat-Hartschaumstoff ausgehärtet werden,
wobei die Komponente (B) mindestens ein aromatisches Polyesterpolyol (b1) und mindestens ein Polyetherpolyol (b2) enthält, wobei das Polyesterpolyol (b1) durch Veresterung von:
(b1.1) 10 bis 50 Mol-%, einer Dicarbonsäurezusammensetzung, enthaltend aromatische Dicarbonsäuren,
(b1.2) 0 bis 20 Mol-% einer oder mehrerer Fettsäuren und/oder Fettsäurederivate,
(b1.3) 10 bis 80 Mol-% eines oder mehrerer aliphatischer oder cycloaliphatischer Diole mit 2 bis 18 C-Atomen oder Alkoxylate derselben,
(b1.4) 0 bis 50 Mol-% eines höherfunktionellen Polyols ausgewählt aus der Gruppe bestehend aus Glycerin, alkoxyliertem Glycerin, Trimethylolpropan, alkoxyliertem Trimethylolpropan, Pentaerythrol, alkoxyliertem Pentaerythrol,
erzeugt wird, sich die Gesamtmenge der Komponenten (b1.1) bis (b1.4), zu 100 Mol-% addiert und das aromatische Polyesterpolyol (b1) eine mittlere Funktionalität von ≤ 3.0 und ≥ 1.7 besitzt,
und wobei das Polyetherpolyol (b2) eine Hydroxylzahl von 160 - 350 mg KOH/g besitzt, und durch Alkoxylierung eines Starters oder Startergemisches mit einer mittleren Funktionalität ≤ 3.5 und ≥ 1.5 hergestellt wird,
wobei als Alkylenoxid zur Herstellung von Polyetherpolyol (b2) mindestens 80 Gew.-% Ethylenoxid eingesetzt wird, und Polyetherpolyol (b2) mindestens 90 % primäre Hydroxyl-Endgruppen und maximal 10% sekundäre Hydroxyl-Endgruppen aufweist,
wobei das Massenverhältnis der Komponente (b1) zu Komponente (b2) ≤ 3 und ≥ 1 beträgt und die Summe der Massenanteile von Komponente (b1) und Komponente (b2), bezogen auf Komponente (B) > 80 Gew. % ist,
und das Treibmittel (D) chemische und physikalische Treibmittel enthält, wobei das chemische Treibmittel ausgewählt ist aus der Gruppe, bestehend aus Ameisensäure-Wassermischungen und Ameisensäure.

2. Verfahren nach Anspruch 1, **dadurch gekennzeichnet, dass** das aromatische Polyesterpolyol (b1) eine OH Zahl von 190 bis 250 mg KOH/g und eine Funktionalität von 1,7 bis 2,5 besitzt.

3. Verfahren nach einem der Ansprüche 1 bis 2, **dadurch gekennzeichnet, dass** das aromatische Polyesterpolyol (b1) 5 bis 15 Mol-% einer oder mehrerer Fettsäuren und/oder Fettsäurederivate enthält.

4. Verfahren nach einem der Ansprüche 1 bis 3, **dadurch gekennzeichnet, dass** ausschließlich Diethylenglycol als Diol mit 2 bis 18 C-Atomen (b1.3) verwendet wird.

5. Verfahren nach einem der Ansprüche 1 bis 4, **dadurch gekennzeichnet, dass** der Gehalt an (b1.4), 0 Mol-% beträgt.

6. Verfahren nach einem der Ansprüche 1 bis 5, **dadurch gekennzeichnet, dass** 2 - 50 Mol-% Glycerin oder ethoxyliertes Glycerin als Komponente (b1.4) verwendet wird.

7. Verfahren nach einem der Ansprüche 1 bis 6, **dadurch gekennzeichnet, dass** das Polyetherpolyol (b2) eine Hydroxylzahl von 170 - 290 mg KOH/g aufweist

8. Verfahren nach einem der Ansprüche 1 bis 7, **dadurch gekennzeichnet, dass** das Polyetherpolyol (b2) durch Alkoxylierung eines Starters oder Startergemisches mit einer mittleren Gesamtfunktionalität von ≤ 3 und ≥ 2 hergestellt wird.

9. Verfahren nach einem der Ansprüche 1 bis 8, **dadurch gekennzeichnet, dass** das Polyetherpolyol (b2) durch Ethoxylierung von Diethylenglycol erhalten wird.

10. Verfahren nach einem der Ansprüche 1 bis 9, **dadurch gekennzeichnet, dass** die Flammschutzmittel (C) ein phosphorhaltiges Flammschutzmittel umfassen und der Gehalt an Phosphor, bezogen auf das Gesamtgewicht der Komponenten (A) bis (F), < 0,4 Gew.-% beträgt

11. Verfahren nach einem der Ansprüche 1 bis 10, **dadurch gekennzeichnet, dass** der Katalysator (E) mindestens einen Amin Katalysator mit tertiärer Aminogruppe, ausgewählt aus der Gruppe, bestehend aus Pentamethyldiethylentriamin und Bis(2-dimethyl-aminoethyl)ether und mindestens einen Alkalimetallcarboxylatkatalysator, ausgewählt aus der Gruppe, bestehend aus Kaliumformiat, Kaliumacetat und Kalium-2-Ethylhexanoat, enthält.

12. Verfahren nach einem der Ansprüche 1 bis 11, **dadurch gekennzeichnet, dass** die Reaktionsmischung in einer Doppelbandanlage zur Herstellung von Sandwichelementen auf eine sich kontinuierlich bewegende Deckschicht aufgetragen wird.

13. Polyolkomponente zur Herstellung von Polyisocyanurat-Hartschaumstoffen, enthaltend:
70 bis 90 Gew. -% der Verbindungen mit mindestens 1,7 gegenüber Isocyanat-Gruppen reaktiven Wasserstoffatomen (B),
2 bis 10 Gew. -% Flammschutzmittel (C),
1 bis 20 Gew. -% Treibmittel (D),
0,5 bis 10 Gew. -% Katalysatoren (E) und
0,0 bis 20 Gew. -% weitere Hilfs- und Zusatzstoffe (F),
jeweils bezogen auf das Gesamtgewicht der Komponenten (B) bis (F), wobei sich die Gew.-% zu 100 Gew. % ergänzen und wobei die Komponenten (B) bis (F) wie in einem der Ansprüche 1 bis 11 definiert sind.

14. Polyisocyanurat-Hartschaumstoff, erhältlich nach dem Verfahren gemäß einem oder mehreren der Anspruche 1 bis 12.

## Claims

1. A process for producing rigid polyisocyanurate foams, wherein
(A) polyisocyanates are mixed with
(B) compounds having isocyanate-reactive hydrogen atoms
(C) flame retardant
(D) blowing agent
(E) catalyst and
(F) optionally further auxiliary and additive substances
at an isocyanate index of at least 220 to afford a reaction mixture and cured to afford the rigid polyisocyanurate foam,
wherein the component (B) comprises at least one aromatic polyester polyol (b1) and at least one polyether polyol (b2), wherein the polyester polyol (b1) is produced by esterification of:
(b1.1) 10 to 50 mol% of a dicarboxylic acid composition comprising aromatic dicarboxylic acids,
(b1.2) 0 to 20 mol% of one or more fatty acids and/or fatty acid derivatives,
(b1.3) 10 to 80 mol% of one or more aliphatic or cycloaliphatic diols having 2 to 18 carbon atoms or alkoxylates of same,
(b1.4) 0 to 50 mol% of a higher-functional polyol selected from the group consisting of glycerol, alkoxylated glycerol, trimethylolpropane, alkoxylated trimethylolpropane, pentaerythritol, alkoxylated pentaerythritol,
the total amount of the components (b1.1) to (b1.4) sums to 100 mol% and the aromatic polyester polyol (b1) has an average functionality of ≤ 3.0 and ≥ 1.7,
and wherein the polyether polyol (b2) has a hydroxyl number of 160-350 mg KOH/g and is produced by alkoxylation of a starter or starter mixture having an average functionality ≤ 3.5 and ≥ 1.5,
wherein as the alkylene oxide for producing polyether polyol (b2) at least 80% by weight of ethylene oxide is employed and polyether polyol (b2) comprises at least 90% primary hydroxyl end groups and at most 10% secondary hydroxyl end groups,
wherein the mass ratio of the component (b1) to component (b2) is ≤ 3 and ≥ 1 and the sum of the mass fractions of component (b1) and component (b2), based on component (B), is > 80% by weight,
and the blowing agent (D) comprises chemical and physical blowing agents, wherein the chemical blowing agent is selected from the group consisting of formic acid-water mixtures and formic acid.

2. The process according to claim 1, wherein the aromatic polyester polyol (b1) has an OH number of 190 to 250 mg KOH/g and a functionality of 1.7 to 2.5.

3. The process according to either of claims 1 to 2, wherein the aromatic polyester polyol (b1) comprises 5 to 15 mol% of one or more fatty acids and/or fatty acid derivatives.

4. The process according to any of claims 1 to 3, wherein exclusively diethylene glycol is used as the diol having 2 to 18 carbon atoms (b1.3).

5. The process according to any of claims 1 to 4, wherein the content of (b1.4) is 0 mol%.

6. The process according to any of claims 1 to 5, wherein 2-50 mol% of glycerol or ethoxylated glycerol is used as component (b1.4).

7. The process according to any of claims 1 to 6, wherein the polyether polyol (b2) has a hydroxyl number of 170-290 mg KOH/g.

8. The process according to any of claims 1 to 7, wherein the polyether polyol (b2) is produced by alkoxylation of a starter or starter mixture having an average total functionality of ≤ 3 and ≥ 2.

9. The process according to any of claims 1 to 8, wherein the polyether polyol (b2) is obtained by ethoxylation of diethylene glycol.

10. The process according to any of claims 1 to 9, wherein the flame retardants (C) comprise a phosphorus-containing flame retardant and the content of phosphorus, based on the total weight of the components (A) to (F), is < 0.4% by weight.

11. The process according to any of claims 1 to 10, wherein the catalyst (E) comprises at least one amine catalyst having a tertiary amino group selected from the group consisting of pentamethyldiethylenetriamine and bis(2-dimethylaminoethyl) ether and at least one alkali metal carboxylate catalyst selected from the group consisting of potassium formate, potassium acetate and potassium 2-ethylhexanoate.

12. The process according to any of claims 1 to 11, wherein the reaction mixture is applied to a continuously moving outer layer in a double-belt plant for producing sandwich elements.

13. A polyol component for producing rigid polyisocyanurate foams, comprising:
70% to 90% by weight of the compounds having at least 1.7 isocyanate-reactive hydrogen atoms (B),
2% to 10% by weight of flame retardant (C),
1% to 20% by weight of blowing agent (D),
0.5% to 10% by weight of catalysts (E) and
0.0% to 20% by weight of further auxiliary and additive substances (F),
in each case based on the total weight of the components (B) to (F), wherein the % by weight values sum to 100% by weight and wherein the components (B) to (F) are defined as in any of claims 1 to 11.

14. A rigid polyisocyanurate foam obtainable by the process according to one or more of claims 1 to 12.

## Revendications

1. Procédé de préparation de mousses rigides de polyisocyanurate, dans lequel
(A) des polyisocyanates
(B) des composés présentant des atomes d'hydrogène réactifs vis-à-vis des groupes isocyanate
(C) des agents ignifuges
(D) des agents gonflants
(E) un catalyseur et
(F) éventuellement d'autres adjuvants et additifs
sont mélangés, à un indice d'isocyanate d'au moins 220, en un mélange réactionnel et durcis en la mousse rigide de polyisocyanurate,
le composant (B) contenant au moins un polyesterpolyol aromatique (b1) et au moins un polyétherpolyol (b2), le polyesterpolyol (b1) étant obtenu par estérification de :
(b1.1) 10 à 50 % en moles d'une composition d'acides dicarboxyliques comprenant des acides dicarboxyliques aromatiques,
(b1.2) 0 à 20 % en moles d'un ou de plusieurs acides gras et/ou dérivés d'acides gras,
(b1.3) 10 à 80 % en moles d'un ou de plusieurs diols aliphatiques ou cycloaliphatiques
comprenant 2 à 18 atomes de carbone ou leurs produits d'alcoxylation,
(b1.4) 0 à 50 % en moles d'un polyol à fonctionnalité supérieure choisi dans le groupe constitué par le glycérol, le glycérol alcoxylé, le triméthylolpropane, le triméthylolpropane alcoxylé, le pentaérythritol, pentaérythritol alcoxylé,
la quantité totale des composants (b1.1) à (b1.4) s'élevant à 100 % en mole et le polyesterpolyol aromatique (b1) présentant une fonctionnalité moyenne ≤ 3,0 et ≥ 1,7,
et le polyétherpolyol (b2) présentant un indice d'hydroxyle de 160 à 350 mg de KOH/g et étant préparé par alcoxylation d'un composé de départ ou mélange de composés de départ présentant une fonctionnalité moyenne ≤ 3,5 et ≥ 1,5,
au moins 80 % en poids d'oxyde d'éthylène étant utilisés comme oxyde d'alkylène pour la préparation du polyétherpolyol (b2) et le polyétherpolyol (b2) présentant au moins 90 % de groupes terminaux hydroxyle primaires et au maximum 10 % de groupes terminaux hydroxyle secondaires,
le rapport massique du composant (b1) au composant (b2) étant ≤ 3 et ≥ 1 et la somme des proportions massiques du composant (b1) et du composant (b2), rapportée au composant (B), étant > 80 % en poids,
et l'agent gonflant (D) comprenant des agents gonflants chimiques et physiques, l'agent gonflant chimique étant choisi dans le groupe constitué par les mélanges d'acide formique/eau et l'acide formique

2. Procédé selon la revendication 1, **caractérisé en ce que** le polyesterpolyol aromatique (b1) présente un indice d'OH de 190 à 250 mg de KOH/g et une fonctionnalité de 1,7 à 2,5.

3. Procédé selon l'une des revendications 1 et 2, **caractérisé en ce que** le polyesterpolyol aromatique (b1) contient 5 à 15 % en moles d'un ou de plusieurs acides gras et/ou dérivés d'acides gras.

4. Procédé selon l'une des revendications 1 à 3, **caractérisé en ce que** l'on utilise comme diol comprenant 2 à 18 atomes de carbone (b1.3) exclusivement du diéthylèneglycol.

5. Procédé selon l'une des revendications 1 à 4, **caractérisé en ce que** la teneur en (b1.4) est de 0 % en moles.

6. Procédé selon l'une des revendications 1 à 5, **caractérisé en ce que** l'on utilise 2 à 50 % en moles de glycérol ou de glycérol éthoxylé comme composant (b1.4).

7. Procédé selon l'une des revendications 1 à 6, **caractérisé en ce que** le polyétherpolyol (b2) présente un indice d'hydroxyle de 170 à 290 mg de KOH/g.

8. Procédé selon l'une des revendications 1 à 7, **caractérisé en ce que** le polyétherpolyol (b2) est préparé par alcoxylation d'un composé de départ ou mélange de composés de départ présentant une fonctionnalité totale moyenne ≤ 3 et ≥ 2.

9. Procédé selon l'une des revendications 1 à 8, **caractérisé en ce que** le polyétherpolyol (b2) est obtenu par éthoxylation de diéthylèneglycol.

10. Procédé selon l'une des revendications 1 à 9, **caractérisé en ce que** les agents ignifuges (C) comprennent un agent ignifuge contenant du phosphore et la teneur en phosphore, rapportée au poids total des composants (A) à (F), est < 0,4% en poids

11. Procédé selon l'une des revendications 1 à 10, **caractérisé en ce que** le catalyseur (E) contient au moins un catalyseur de type amine présentant un groupe amino tertiaire, choisi dans le groupe constitué par la pentaméthyldiéthylènetriamine et le bis(2-diméthylaminoéthyl)éther et au moins un catalyseur de type carboxylate de métal alcalin choisi dans le groupe constitué par le formiate de potassium, l'acétate de potassium et le 2-éthylhexanoate de potassium.

12. Procédé selon l'une des revendications 1 à 11, **caractérisé en ce que** le mélange réactionnel est appliqué sur une couche de recouvrement en mouvement continu dans une installation à double bande pour la fabrication d'éléments sandwich.

13. Composant polyol pour la production de mousses rigides de polyisocyanurate, contenant :
70 à 90 % en poids des composés (B) présentant au moins 1,7 atome d'hydrogène réactif vis-à-vis des groupes isocyanate,
2 à 10 % en poids d'agents ignifuges (C),
1 à 20 % en poids d'agents gonflants (D),
0,5 à 10 % en poids de catalyseurs (E) et
0,0 à 20 % en poids d'autres adjuvants et additifs (F), à chaque fois rapportés au poids total des composants (B) à (F), la somme des % en poids s'élevant à 100 % en poids et les composants (B) à (F) étant tels que définis dans l'une des revendications 1 à 11.

14. Mousse rigide de polyisocyanurate pouvant être obtenue par le procédé selon l'une ou plusieurs des revendications 1 à 12.
